# EUROPEAN PATENT APPLICATION

(11) **EP 4 783 288 A1**
(43) Date of publication of application: **29.07.2026**
(21) Application number: 26152323.7
(22) Date of filing: 16.01.2026
(51) Int. Cl.: H01M 10/0562, H01M 10/0569, H01M 4/13, H01M 10/052

(54) **COMPOSITION FOR FORMING CATHODE ACTIVE MATERIAL LAYER FOR SOLID BATTERY, SOLID BATTERY INCLUDING CATHODE FORMED THEREFROM, AND PREPARATION METHOD THEREOF**

(30) Priority: 24.01.2025 KR 20250011433
(71) Applicant: SAMSUNG SDI CO., LTD., Yongin-si, Gyeonggi-do 17084 (KR)
(72) Inventor: PARK, Bumwoo, 16678 Suwon-si (KR); KIM, Mokwon, 16678 Suwon-si (KR); YOON, Kyungho, 16678 Suwon-si (KR); HWANG, Seungsik, 16677 Suwon-si (KR); KANG, Dongil, 16678 Suwon-si (KR); KU, Junhwan, 16678 Suwon-si (KR)
(74) Representative: Elkington and Fife LLP

(57) **Abstract**

A solid-state battery and a method of preparing the solid-state battery, the solid-state battery including a cathode, an anode current collector, and a solid electrolyte layer disposed between the cathode and the anode current collector, wherein at least one of the cathode and the solid electrolyte layer includes a sulfide-based solid electrolyte, and at least one of a solvent or a decomposition product of the solvent, the solvent including a C1-C20 alkane compound containing one or more halogen atoms.

## Description

### FIELD OF THE INVENTION

The present disclosure relates to a composition for forming a cathode active material layer for a solid-state battery, a solid-state battery including a cathode formed using the composition, and a method of preparing the solid-state battery.

### BACKGROUND OF THE INVENTION

With the rapid growth of electronic devices such as personal computers, video cameras, and mobile phones, the development of the batteries used to power these devices has become increasingly important. Additionally, in the automotive industry, the development of high-output and high-capacity batteries is being pursued for the use in electric vehicles and hybrid electric vehicles.

Among various types of batteries, lithium-ion batteries employ electrolytes containing flammable organic solvents. As a result, there is a risk of overheating or fire in the event of a short circuit. To address these safety concerns, the development of all-solid-state batteries using solid electrolytes in place of liquid electrolytes has gained significant attention.

Since not all-solid-state batteries do not use combustible organic solvents, the safety systems of the all-solid-state batteries can be simplified.

### SUMMARY OF THE INVENTION

Provided is a composition for forming a cathode active material layer for a solid-state battery, the composition including a dispersion medium having improved dispersibility and excellent stability while suppressing reactivity with a sulfide-based solid electrolyte.

Provided is a solid-state battery including a cathode having a cathode active material layer formed from the composition.

Provided is a method of preparing the solid-state battery.

Additional aspects will be set forth in part in the description which follows and, in part, will be apparent from the description, or may be learned by practice of the presented embodiments of the disclosure.

According to an aspect of the disclosure, a solid-state battery includes
a cathode, an anode current collector, and a solid electrolyte layer disposed between the cathode and the anode current collector,
wherein at least one of the cathode or the solid electrolyte layer includes a sulfide-based solid electrolyte, and
at least one of a solvent or a decomposition product of the solvent,
the solvent including a C1-C20 alkane compound including one or more halogen atoms.

The cathode may include a product obtained by coating and drying a composition for forming a cathode active material layer, the composition including a cathode active material, a sulfide-based solid electrolyte, a binder, a conductive material, and a solvent.

The solid electrolyte layer may include a product obtained by coating and drying a composition for forming a solid electrolyte layer, the composition including a sulfide-based solid electrolyte, a binder, and a solvent.

According to one or more embodiments of the disclosure, a method of preparing a solid-state battery includes
preparing a composition for forming a cathode active material layer by mixing a cathode active material, a binder, a first sulfide-based solid electrolyte, and a solvent,
coating and drying the composition on a cathode current collector to form the cathode active material layer and thereby prepare a cathode,
providing an anode current collector,
preparing a laminate by positioning a solid electrolyte layer between the cathode and the anode current collector, the solid electrolyte layer including a second sulfide-based solid electrolyte, wherein the first and the second sulfide-based solid electrolyte can be the same or different and
pressing the laminate,
wherein at least one of the cathode or the solid electrolyte layer includes at least one of a solvent or a decomposition product of the solvent, the solvent including a C1-C20 alkane compound including one or more halogen atoms.

The method may further include forming a first anode active material layer between the anode current collector and the solid electrolyte layer.

According to another aspect of the disclosure, a composition for forming a cathode active material layer for a solid-state battery includes a cathode active material, a sulfide-based solid electrolyte, a binder, a conductive material, and a solvent, wherein the solvent includes a C1-C20 alkane compound including one or more halogen atoms.

The solvent may include a C1-C12 alkane compound containing one or two halogen atoms.

The content of the solvent may be about 15 parts by weight to about 60 parts by weight based on 100 parts by weight of the solids in the composition for forming the cathode active material layer. The viscosity of the composition for forming the cathode active material layer may be from about 500 cps to about 2,500 cps.

The content of the solvent may be about 15 parts by weight to about 60 parts by weight based on 100 parts by weight of the solids in the composition for forming the cathode active material layer.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a graph illustrating voltage change with respect to specific capacity in an all-solid-state battery of Example 1;
FIG. 2 is a graph illustrating voltage change with respect to specific capacity in an all-solid-state battery of Comparative Example 3;
FIG. 3A illustrates the stability evaluation results of a composition for forming a cathode active material layer according to Example 1;
FIG. 3B illustrates the stability evaluation results of a composition for forming a cathode active material layer according to Comparative Example 2;
FIG. 4 is a schematic view illustrating a structure of a solid-state battery employing a cathode according to an embodiment; and
FIG. 5 is a schematic view illustrating a structure of a solid-state battery employing a cathode according to another embodiment.

### DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all a combination of one or more of the associated listed items. Expressions such as "at least one of," when preceding a list of elements, modify the entire list of elements and do not modify the individual elements of the list.

The present disclosure of solid-state batteries may be subject to various modifications and may have various embodiments, and specific embodiments are illustrated in the drawings and described in detail in the detailed description. However, this is not intended to limit the present disclosure of solid-state batteries to specific embodiments, and should be understood to include all modifications, equivalents, or substitutes included within the technical scope of the present inventive concept.

The terminology used herein is for the purpose of describing particular embodiments only and is not intended to be limiting of the present disclosure of solid-state batteries. As used herein, the singular forms are intended to include the plural forms as well, unless the context clearly indicates otherwise. Hereinafter, terms such as "comprise," "include," or "have" are intended to indicate the presence of the features, numbers, steps, operations, components, parts, elements, materials, or combinations thereof described in the specification, and should not be interpreted as precluding the presence or addition of one or more other features, numbers, steps, operations, components, parts, elements, materials, or combinations thereof. The symbol "/" used herein may be interpreted as "and" or "or", depending on the context.

In the drawings, the thicknesses of layers and regions may be exaggerated or reduced for clarity. Throughout the specification, similar parts are denoted by the same reference numerals. When a layer, film, region, plate, or the like is described as being "on" or "over" another part, this includes not only cases where it is directly on the part but also cases where one or more intermediate layers are interposed therebetween. The terms "first," "second," and the like used throughout the specification may be used to describe various elements but should not be construed as limiting the elements. Such terms are used merely to distinguish one element from another.

In the present disclosure, the term "metal" includes both metallic elements as well as metalloids such as silicon and germanium in their elemental or ionic states.

The term "alloy" refers to a mixture of two or more metals.

The term "cathode active material" refers to a cathode material capable of undergoing lithiation and delithiation, and the term "anode active material" refers to a material capable of undergoing lithiation and delithiation.

The terms "lithiation" and "to lithiate" refer to the process of introducing lithium into a cathode active material or anode active material, while the terms "delithiation" and "to delithiate" refer to the process of removing lithium from a cathode active material or anode active material.

The terms "charging" and "to charge" refer to the process of supplying electrochemical energy to a battery, while the terms "discharging" and "to discharge" refer to the process of extracting electrochemical energy from a battery.

In the present disclosure, the terms "cathode" and "positive electrode" refer to the electrode in which electrochemical reduction and lithiation occur during discharge, and the terms "anode" and "negative electrode" refer to the electrode in which electrochemical oxidation and delithiation occur during discharge.

In this specification, the "particle diameter" of a particle refers to the average diameter if the particle is spherical, and to the average major axis length if the particle is non-spherical. The particle diameter may be measured using a particle size analyzer (PSA). Unless explicitly stated otherwise, the "particle diameter" refers to an average particle diameter. The average particle diameter, unless otherwise specified, may be the median particle diameter (D50). The median particle diameter (D50) may be the particle size corresponding to 50 % of the cumulative value in a particle size distribution curve, in which the particles are arranged in ascending order of size starting from the smallest particle. The cumulative value may be, for example, the cumulative volume. The median particle diameter (D50) may be measured, for example, by a laser diffraction method.

When the particle size is measured using a scanning electron microscope, it is defined as the average value of 30 or more randomly selected particles having a size of 1 µm or greater, excluding agglomerates.

The average particle diameter of the cathode active material may be measured using a laser diffraction method. More specifically, the cathode active material may be dispersed in a solution and introduced into a commercially available laser diffraction particle size analyzer (e.g., Microtrac MT 3000), followed by ultrasonic irradiation at about 28 kHz with an output of 60 W.

The median particle diameter (D50) may then be calculated based on the 50 % point of the particle size distribution obtained from the instrument.

The term "length" and "thickness" as utilized herein refers to, for example, an average length and an average thickness, respectively. The length and thickness are measured utilizing software from a scanning electron microscope image.

The cathode of an all-solid-state battery contains, in addition to a cathode active material, a sulfide-based solid electrolyte with excellent ionic conductivity. To commercialize all-solid-state batteries having a cathode layer that includes a sulfide-based solid electrolyte, it is necessary to form the cathode layer by using a wet coating process. However, sulfide-based solid electrolytes are readily degraded by polar solvents, and when such solvents are used in the formation of the cathode layer, the resulting battery performance deteriorates. Accordingly, there is a need for improvement in the cathode layer of solid-state batteries.

Embodiments of this disclosure include a composition for forming a cathode active material layer, a cathode formed therefrom, a solid-state battery containing a cathode including a cathode active material layer, and a method of preparing the solid-state battery.

When preparing the cathode active material layer of a solid-state battery, the high reactivity of sulfide-based solid electrolytes has conventionally limited the choice of solvents for slurry preparation to nonpolar solvents such as toluene and heptane. However, such nonpolar solvents have low boiling points and high volatility, which result in insufficient processability and poor dispersibility in wet slurry processes.

Accordingly, solvents containing polar functional groups, such as octyl acetate, have been proposed. Nevertheless, due to the reactivity between polar functional groups and sulfide-based solid electrolytes, it may be difficult to suppress slurry gelation, and thus, there remains a need for new solvents with reduced reactivity toward sulfide-based solid electrolytes.

According to an embodiment of the present disclosure, a solid-state battery includes a cathode, an anode current collector, and a solid electrolyte layer between the cathode and the anode current collector.

At least one selected from the cathode and the solid electrolyte layer includes
a sulfide-based solid electrolyte, and
a solvent, a decomposition product of the solvent, or a combination thereof,

The solvent may include a C1-C20 alkane compound including one or more halogen atoms.

As used herein, the term "decomposition product of a solvent" refers to a product obtained by partial decomposition of the solvent during the manufacturing process, formation, and/or charge-discharge of the solid-state battery.

The Hansen solubility parameter (δ) of the solvent may be greater than 0 and less than 2.9 MPa^{1/2}.

As used herein, the "Hansen solubility parameter (δ)" refers to a value calculated using the program HSPiP (Hansen Solubility Parameters in Practice), developed by the Dr. Hansen group. The Hansen solubility parameter may represent the solubility characteristics of a solvent and may be subdivided to reflect bonding interactions in a material, including a dispersion component (δD) caused by nonpolar dispersion forces, a polar component (δP) caused by permanent dipole interactions, and a hydrogen bonding component (δH). In this manner, the Hansen solubility parameter (HSP) provides more detailed information about bonding within a material than other solubility indicators, and thus enables a more accurate and systematic evaluation of solubility or miscibility.

The Hansen solubility parameter of the solvent may be greater than 0 and not more than 2.5 MPa^{1/2}, 1.0 MPa^{1/2} and not more than 2.48 MPa^{1/2}, 1.2 MPa^{1/2} and not more than 2.45 MPa^{1/2}, or from about 1.4 MPa^{1/2} to about 2.4 MPa^{1/2}. When the Hansen solubility parameter of the solvent falls within the above range, reactivity with the sulfide-based solid electrolyte may be suppressed, and dispersibility with other components during composition preparation may be improved, enabling the formation of cathodes and/or solid electrolyte layers with excellent uniformity. If the Hansen solubility parameter of the solvent is 2.9 MPa^{1/2} or greater, the composition may exhibit good dispersibility, but side reactions may occur between the solvent and the sulfide-based solid electrolyte.

The boiling point of the solvent may be 280 °C or less, 220 °C or less, about 150 °C to about 220 °C, about 170 °C to about 220 °C, or about 180 °C to about 210 °C. When the boiling point of the solvent is within the above range, drying of the composition proceeds well, improving the film-forming properties of the cathode and the solid electrolyte layer, and enabling the production of cathode active material layers and solid electrolyte layers with uniform thickness and properties, thereby improving the performance of the solid-state battery.

The dielectric constant of the solvent may also be greater than 2. The dielectric constant of the solvent may be greater than about 2 to about 8, greater than about 2 to about 7, or about 4.3 to about 7. The dipole moment of the solvent may be greater than or equal to 1.4 or from about 1.4 to about 2.3, or from about 1.4 to about 1.7. If the dielectric constant and dipole moment of the solvent are smaller than the above ranges, the solvent may be nonpolar and has limited ability to donate or accept electrons, resulting in low reactivity toward the sulfide-based solid electrolyte but poor dispersibility. If the dielectric constant and dipole moment exceed the previously described ranges, the solvent becomes highly polar and may donate or accept electrons, increasing its reactivity and potentially causing side reactions with the sulfide-based solid electrolyte.

The solvent may be a C1-C20 alkane compound containing one or more halogen atoms, and may contain from 1 to 4 halogen atoms. The alkane compound may be a linear or branched alkane compound.

As used herein, the halogen refers to fluorine, bromine, chlorine, or iodine.

According to an embodiment, the solvent may be a C6 to C20, C6 to C18, C6 to C17, C6 to C16, C6 to C15, C6 to C14, C6 to C13, C6 to C12, or C6 to C11 alkane compound containing one or two halogen atoms. When the carbon number and the number of halogen atoms of the alkane compound fall within the above ranges, the solvent has appropriate polarity, low reactivity toward the sulfide-based solid electrolyte, and excellent stability.

The C1-C20 alkane compound containing one or more halogen atoms may be selected from one or more compounds represented in Group 1.

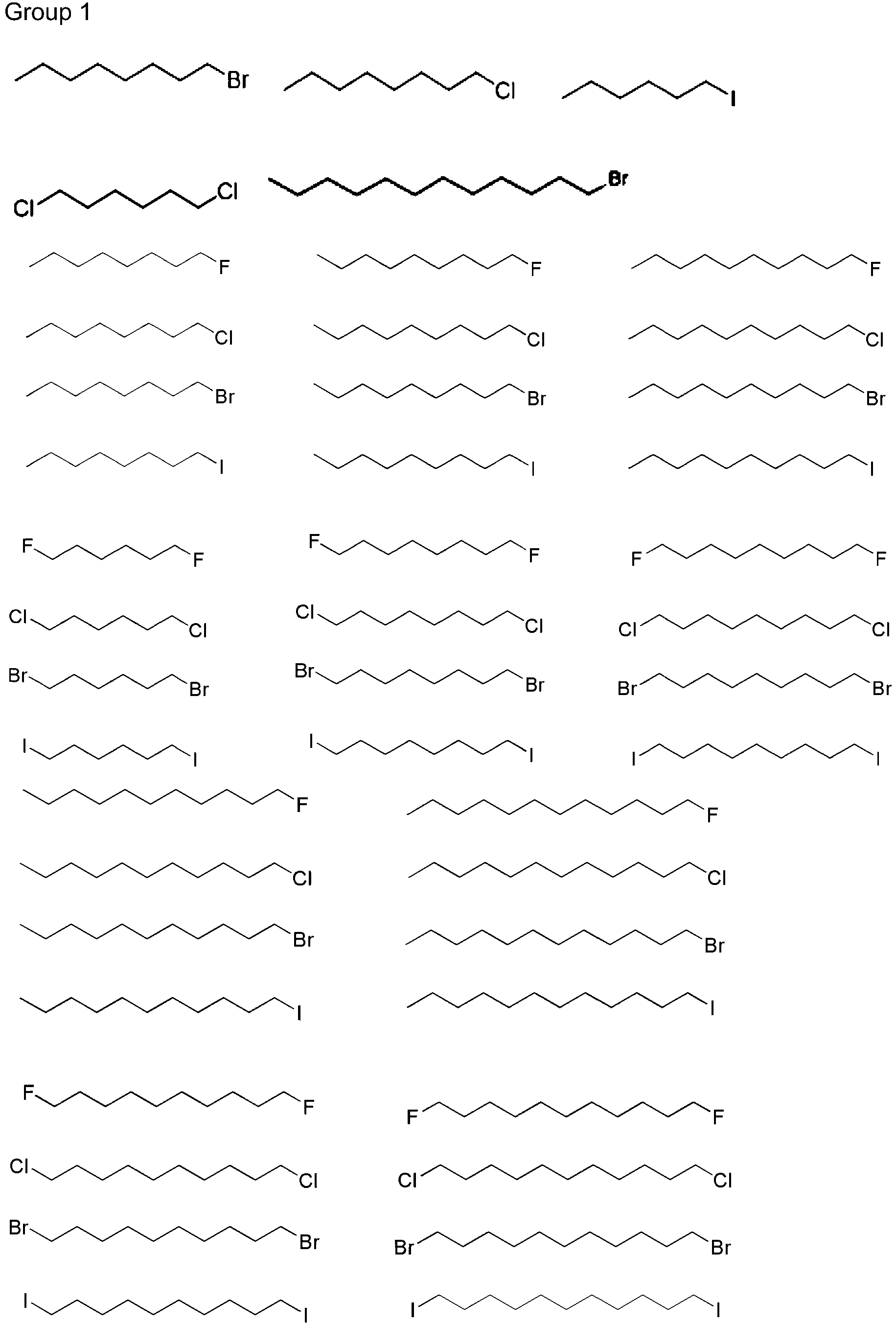

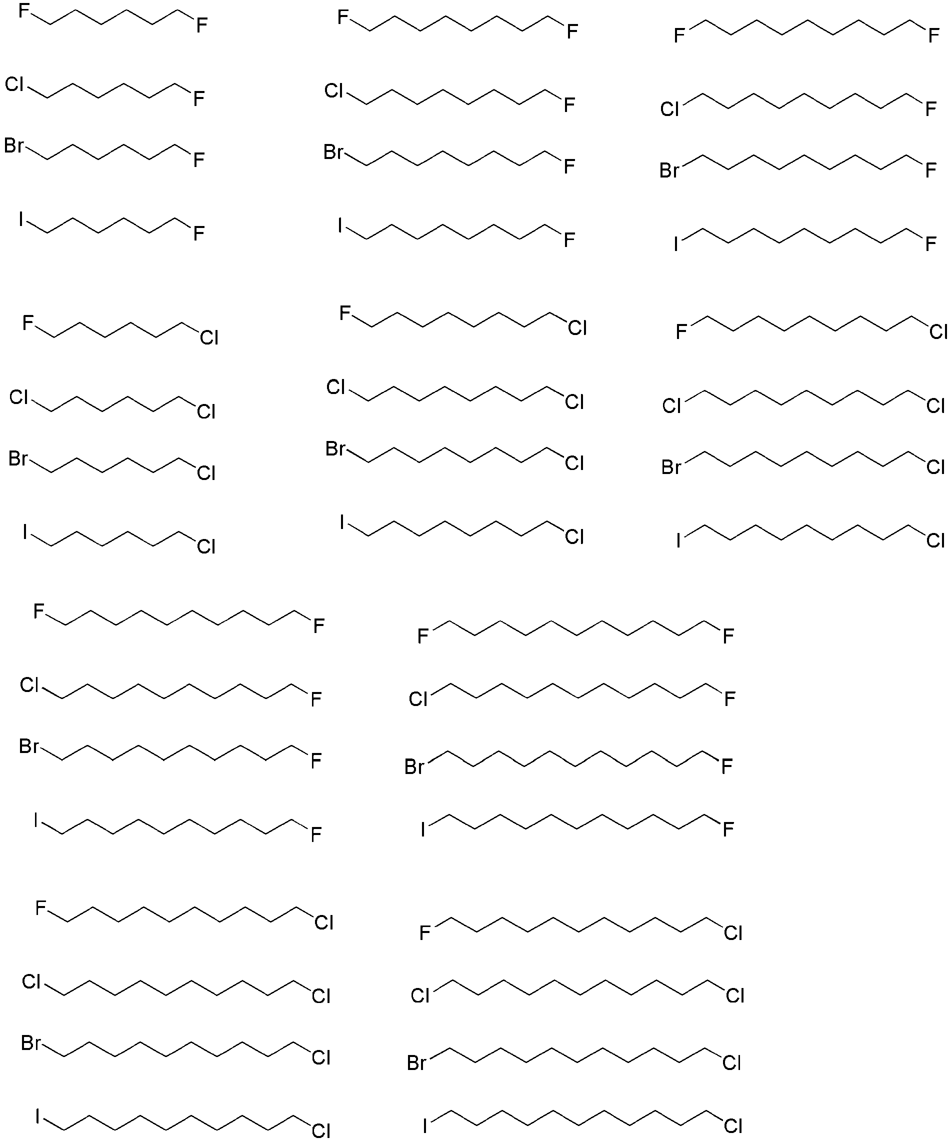

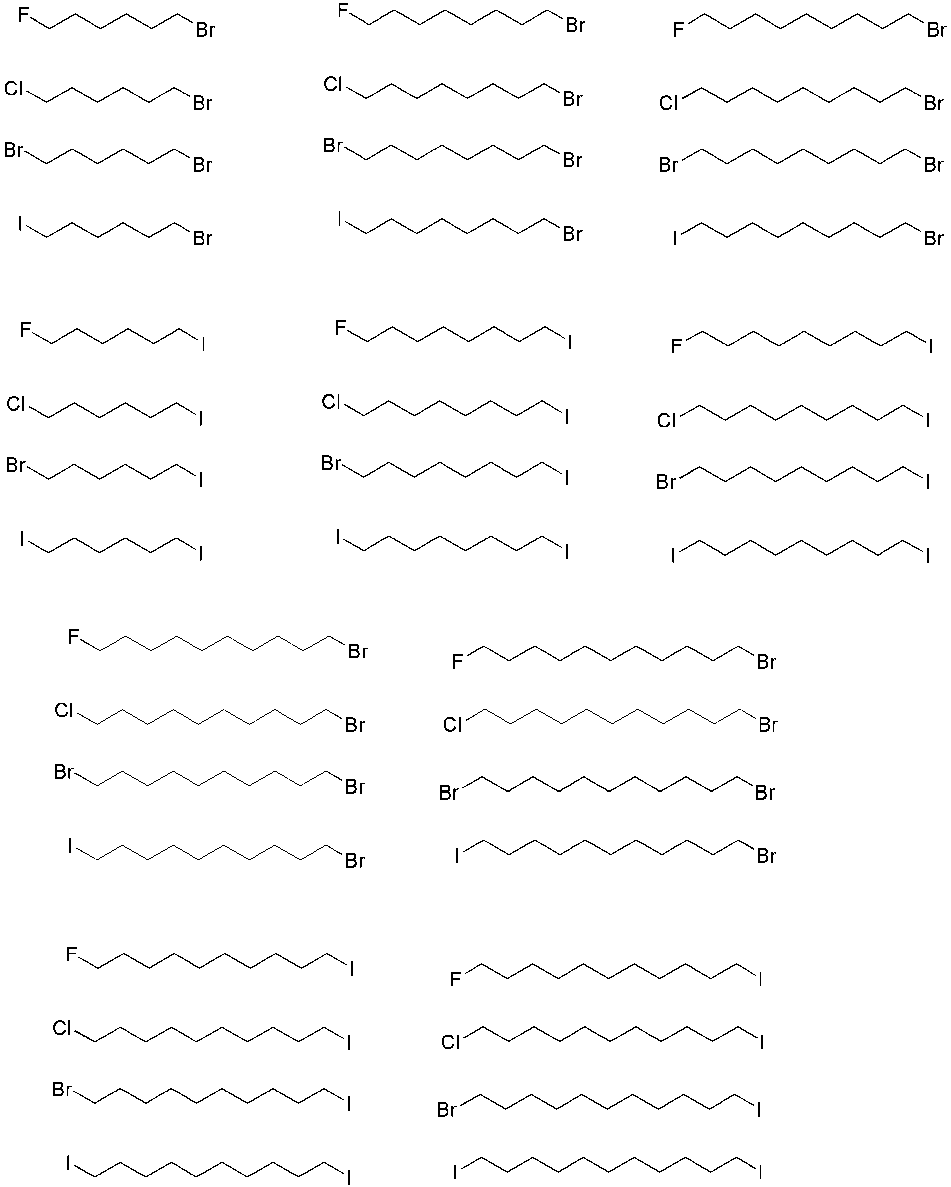

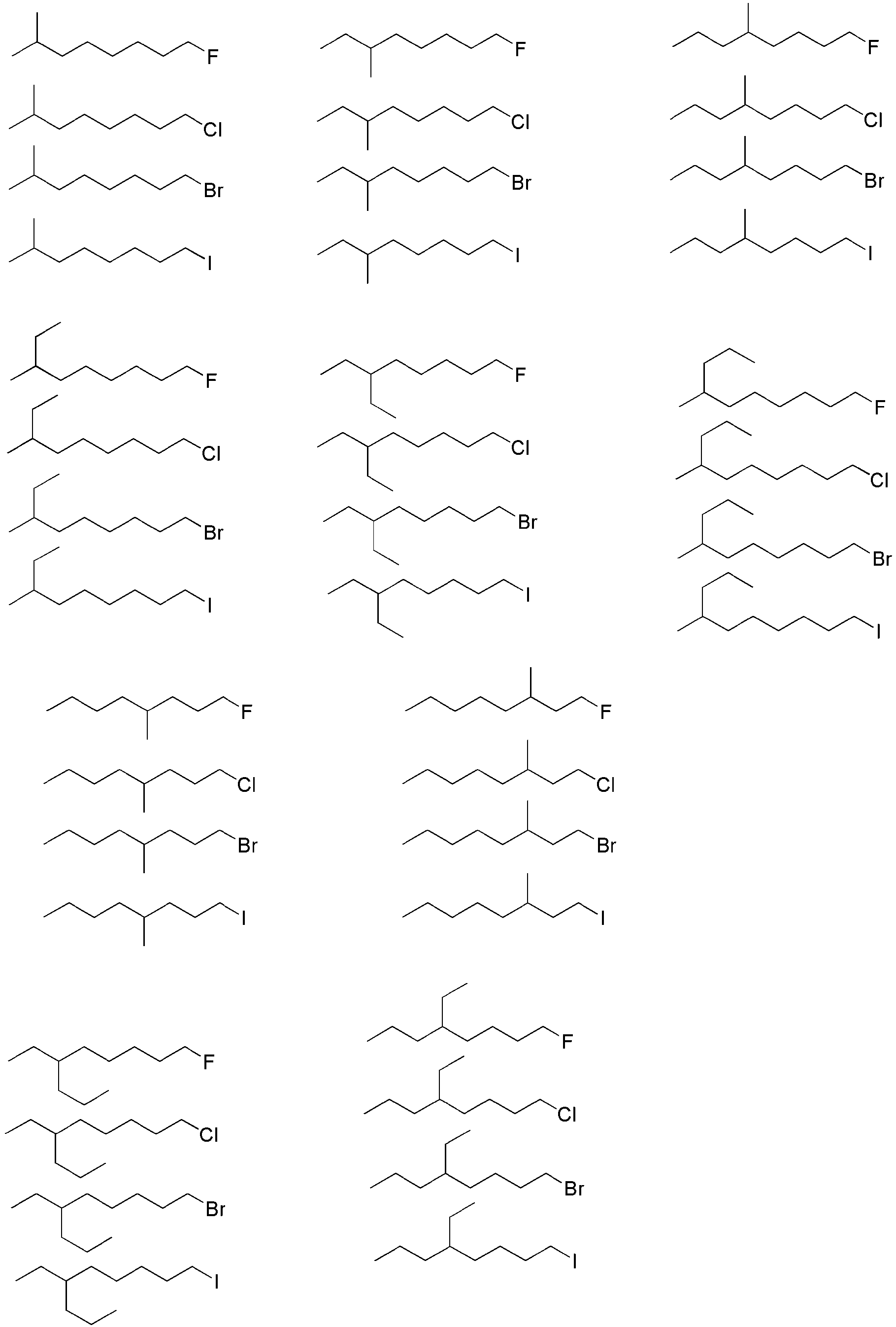

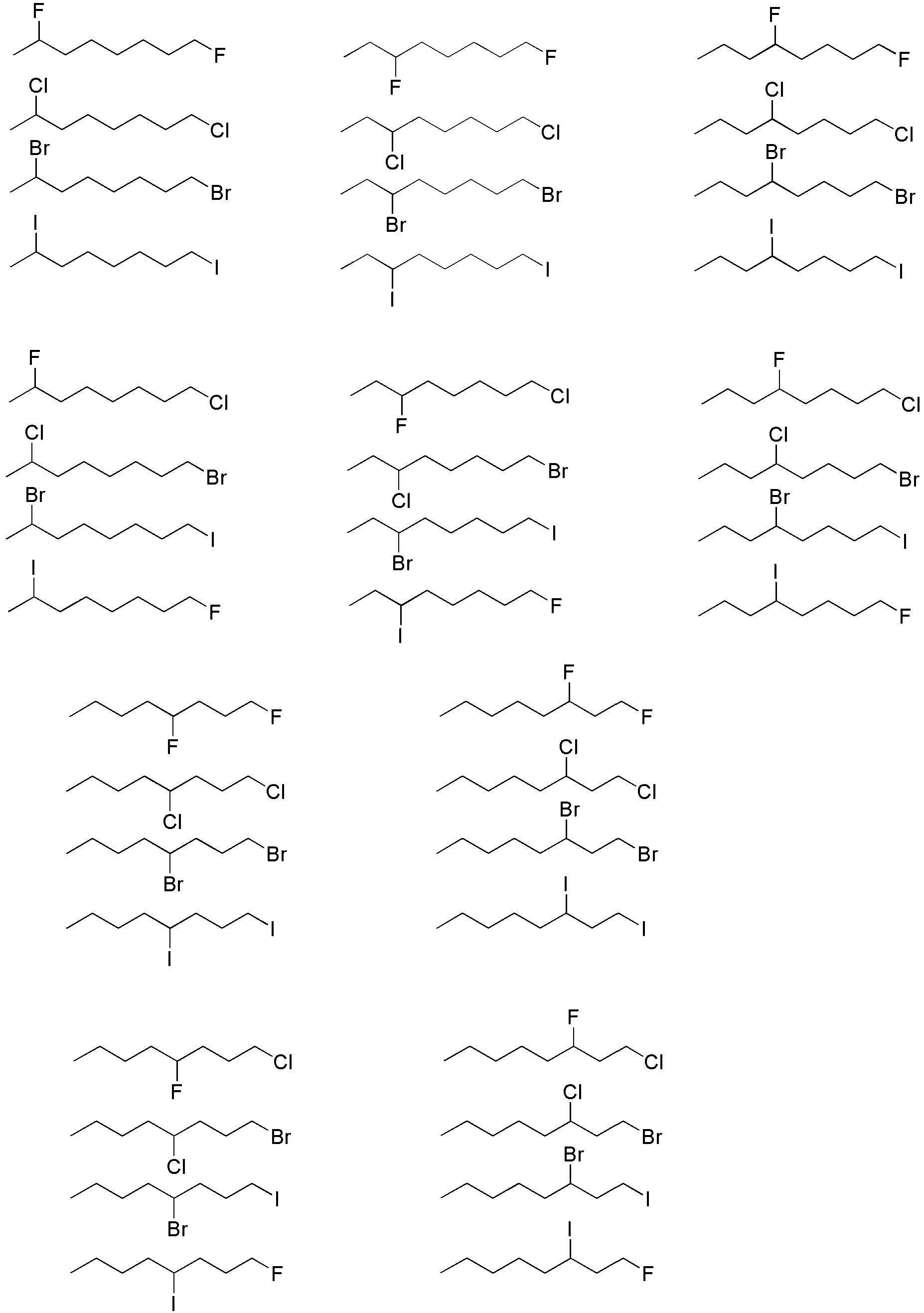

In addition to one or more compounds represented by Group 1, any stoichiometrically feasible C1-C20 alkane compound containing one or more halogen atoms may be used.

The solvents of Group 1 have a lower polarity than conventional octyl acetate and the polarity level may be controlled by mixing various solvents in Group 1. By controlling the polarity level, the reactivity with the sulfide-based solid electrolyte is minimized and the dispersibility of the cathode active material and conductive material is improved, thus enabling the production of a cathode with improved uniformity. By using the cathode, a solid-state battery with improved cycle characteristics, high-rate characteristics, and low-temperature performance may be manufactured.

The cathode may include a cathode current collector and a cathode active material layer, and the cathode active material layer may include a product obtained by coating and drying a composition comprising a cathode active material, a sulfide-based solid electrolyte, a binder, a conductive material, and a solvent.

The cathode active material layer according to an embodiment may include a cathode active material, a binder, a conductive material, a sulfide-based solid electrolyte, and at least one selected from a solvent and a decomposition product thereof.

The total content of at least one selected from the solvent and the decomposition product thereof in the cathode active material layer may be 60 parts by weight or less, about 0.01 parts by weight to about 60 parts by weight, about 0.1 parts by weight to about 60 parts by weight, about 0.1 parts by weight to about 50 parts by weight, about 0.1 parts by weight to about 30 parts by weight, about 0.1 parts by weight to about 20 parts by weight, about 0.1 parts by weight to about 15 parts by weight, about 0.1 parts by weight to about 10 parts by weight, about 0.1 parts by weight to about 9 parts by weight, about 0.1 parts by weight to about 8 parts by weight, about 0.1 parts by weight to about 6 parts by weight, about 0.1 parts by weight to about 5 parts by weight, or about 1 part by weight to about 5 parts by weight, based on 100 parts by weight of the total weight of the cathode active material layer. When the total content of at least one selected from the solvent and the decomposition product thereof is within the above range, a cathode having low reactivity toward the sulfide-based solid electrolyte and excellent stability may be produced, enabling the manufacture of a solid-state battery with improved cycle characteristics, high-rate characteristics, and low-temperature performance.

As used herein, "100 parts by weight of the total weight of the cathode active material layer" may refer to 100 parts by weight of the solids contained in the cathode active material layer, for example, the total content of the cathode active material, solid electrolyte, conductive material, and binder.

As used herein, "100 parts by weight of the total weight of the cathode active material layer" may be interpreted the same as "100 parts by weight of the total content of solids in the composition for forming a cathode active material layer." Here, 100 parts by weight of the total content of solids in the composition for forming a cathode active material layer refers to 100 parts by weight of the total content of the cathode active material, solid electrolyte, conductive material, and binder.

In an embodiment, the presence of at least one selected from the above-described solvent and decomposition product thereof in the cathode and/or the solid electrolyte layer of the solid-state battery may be identified by analysis techniques such as energy dispersive spectroscopy (EDS), inductively coupled plasma spectrometry (ICP), high-performance liquid chromatography (HPLC), or gas chromatography-mass spectrometry (GC-MS). The content of at least one selected from the above-described solvent and decomposition product thereof may also be evaluated using headspace sampler gas chromatograph/mass spectrometry (HSS-GC/MS), which analyzes the components of the solvent.

The solid electrolyte layer according to an embodiment includes a product obtained by coating and drying a composition comprising a sulfide-based solid electrolyte, a binder, and a solvent.

The solid electrolyte layer may include a sulfide-based solid electrolyte, a binder, and at least one selected from a solvent and a decomposition product thereof, and the content of the at least one selected from the solvent and the decomposition product thereof may be 60 parts by weight or less, about 0.01 parts by weight to about 60 parts by weight, about 0.1 parts by weight to about 60 parts by weight, about 0.1 parts by weight to about 50 parts by weight, about 0.1 parts by weight to about 30 parts by weight, about 0.1 parts by weight to about 20 parts by weight, about 0.1 parts by weight to about 15 parts by weight, about 0.1 parts by weight to about 10 parts by weight, about 0.1 parts by weight to about 9 parts by weight, about 0.1 parts by weight to about 8 parts by weight, about 0.1 parts by weight to about 6 parts by weight, about 0.1 parts by weight to about 5 parts by weight, or about 1 part by weight to about 5 parts by weight, based on 100 parts by weight of the total weight of the solid electrolyte layer. As used herein, 100 parts by weight of the total weight of the solid electrolyte layer may refer to 100 parts by weight of the total content of the sulfide-based solid electrolyte and the binder.

When the content of at least one selected from the solvent and the decomposition product thereof in the solid electrolyte layer falls within the above range, a solid electrolyte layer with low reactivity toward the sulfide-based solid electrolyte and excellent stability may be prepared, enabling the manufacture of a solid-state battery with improved cycle characteristics, high-rate characteristics, and low-temperature performance.

A first anode active material layer may be disposed between the anode current collector and the solid electrolyte layer.

The first anode active material layer may include an anode active material and a binder, and the anode active material may include at least one selected from carbon-based anode active materials, metal-based anode active materials, and metalloid-based anode active materials. The carbon-based anode active material may include amorphous carbon, crystalline carbon, porous carbon, or a combination thereof.

After the solid-state battery is charged, the battery further may include a second anode active material layer disposed between the anode current collector and the first anode active material layer. The second anode active material layer may be a metal layer, and the metal layer may comprise lithium or a lithium alloy.

The solid-state battery may be an all-solid-state battery. The all-solid-state battery may be an all-solid-state secondary battery.

The solid-state battery uses a solid electrolyte and may further include a liquid electrolyte for the cathode. The solid-state battery may additionally include a liquid electrolyte.

According to another aspect, a composition for forming a cathode active material layer for a solid-state battery includes a cathode active material, a sulfide-based solid electrolyte, a binder, a conductive material, and a solvent,
wherein the solvent includes a C1-C20 alkane compound containing one or more halogen atoms.

The solvent may be selected from one or more compounds represented by Group 1.

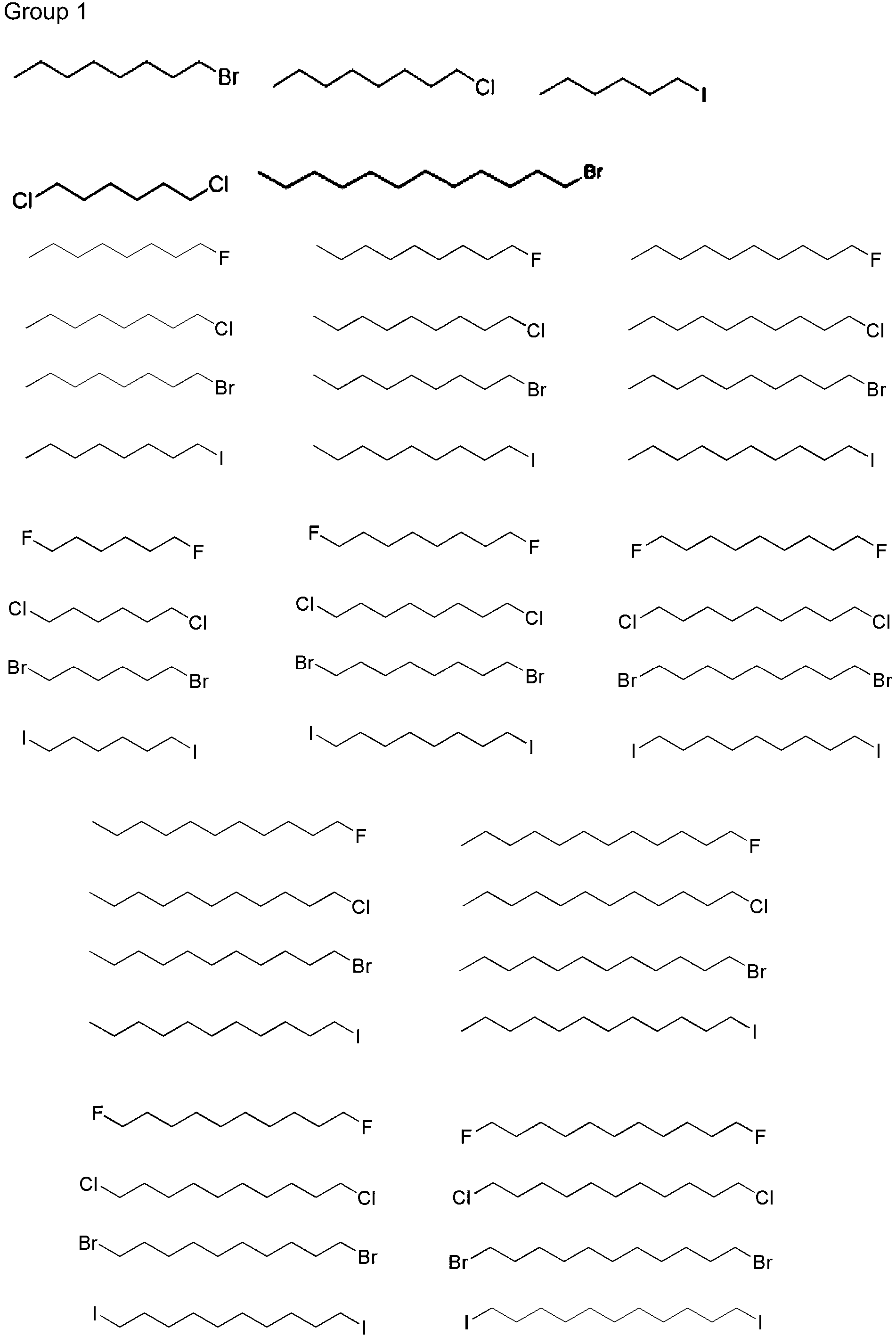

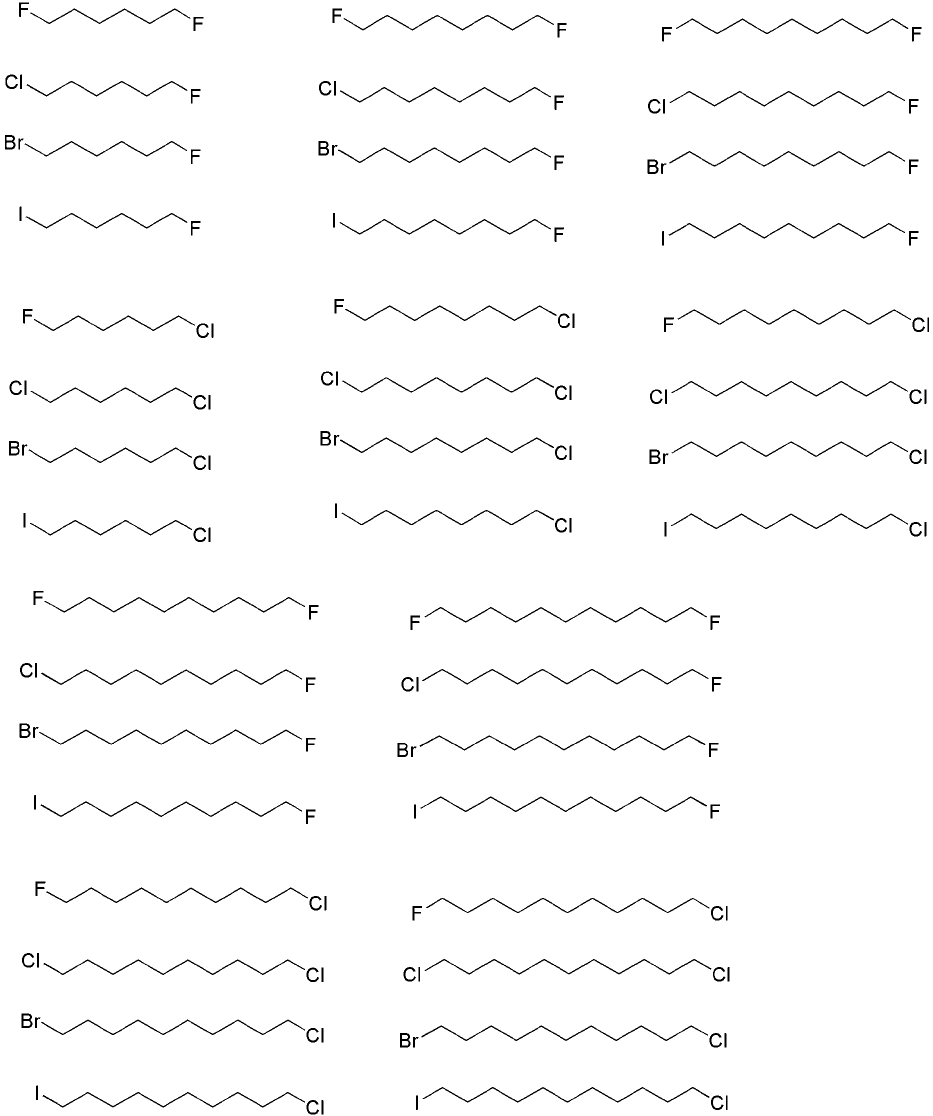

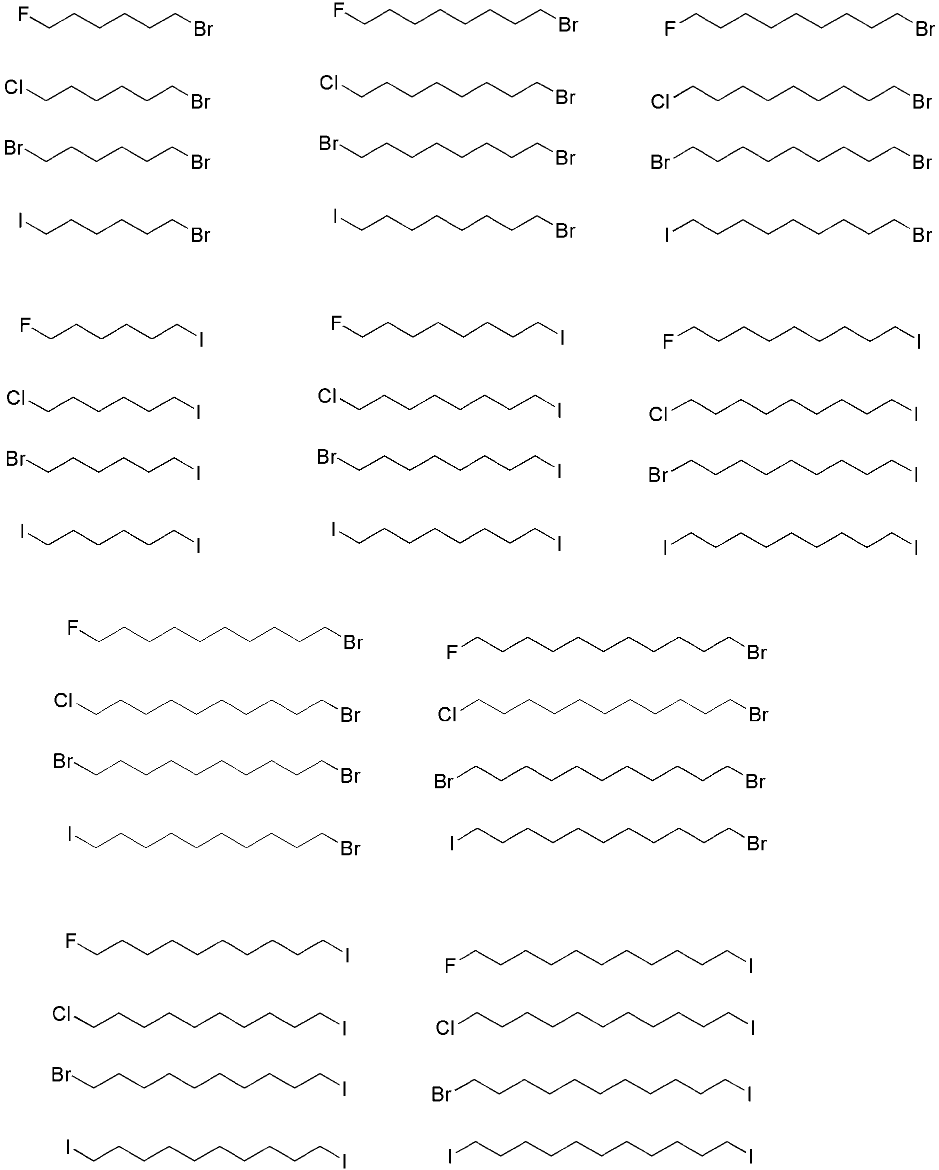

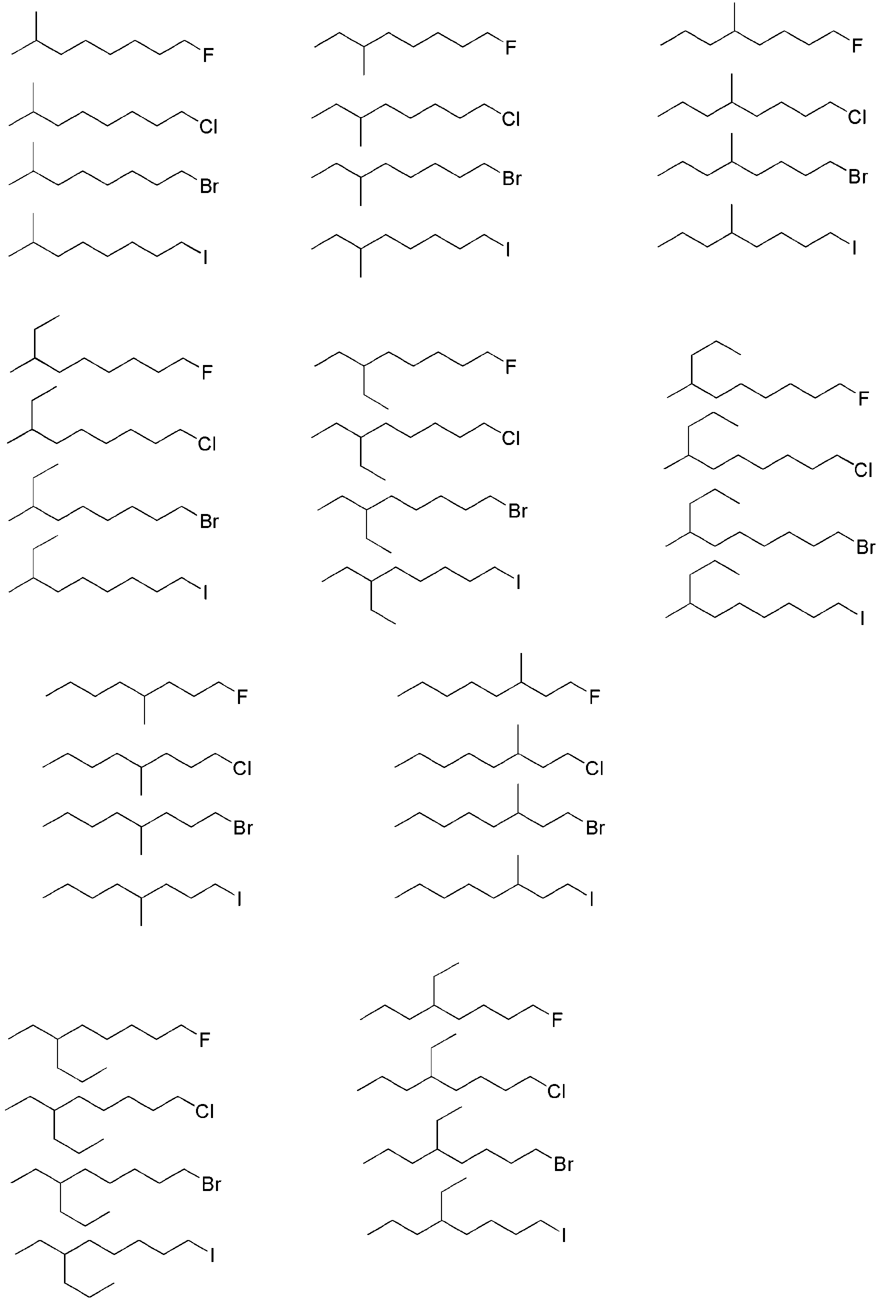

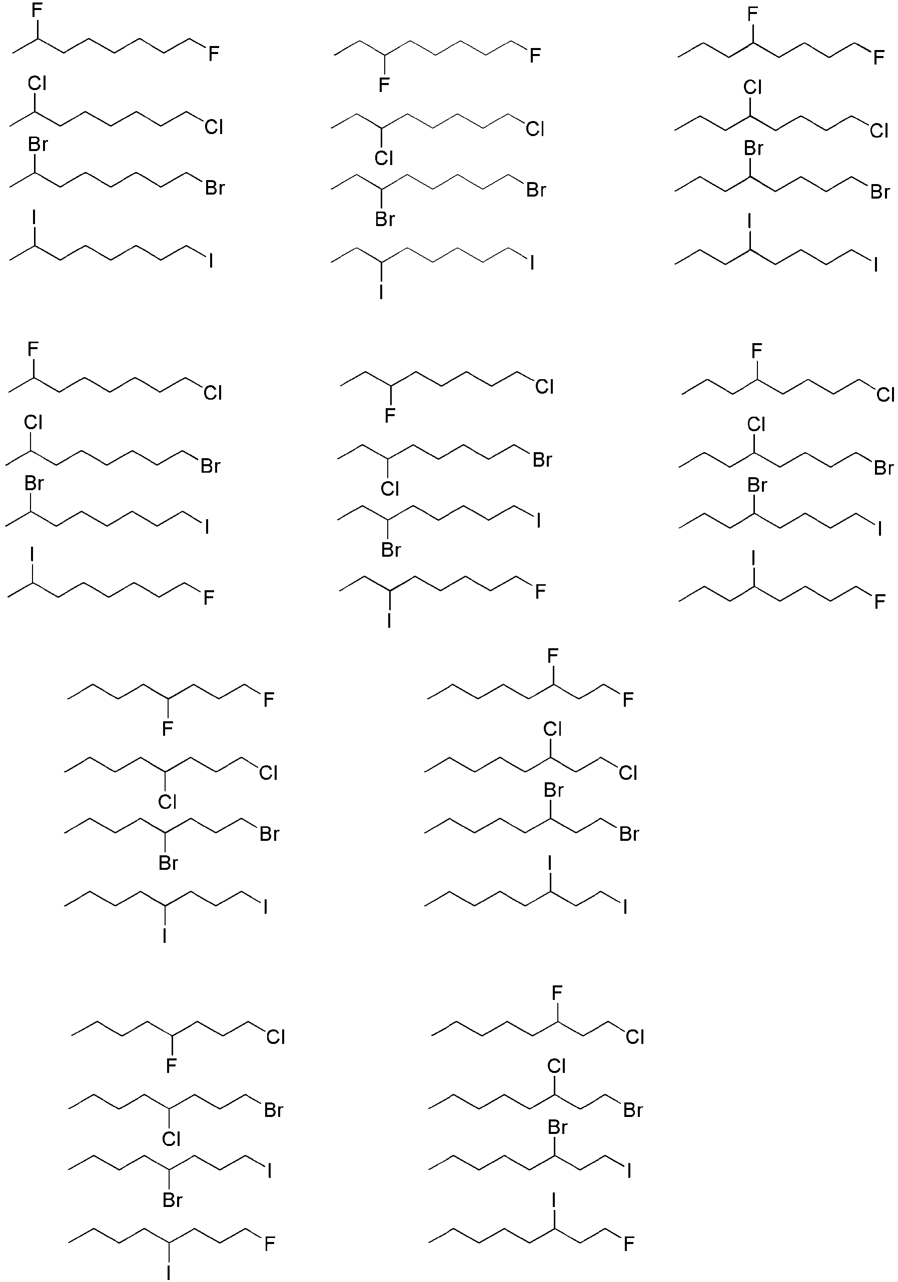

In the composition for forming a cathode active material layer according to an embodiment, the solvent may be present in an amount of about 15 parts by weight to about 60 parts by weight, about 15 parts by weight to about 58 parts by weight, about 18 parts by weight to about 56 parts by weight, about 20 parts by weight to about 55 parts by weight, about 25 parts by weight to about 53 parts by weight, or about 30 parts by weight to about 50 parts by weight, based on 100 parts by weight of the solids in the composition. When the solvent content is within the above range, a cathode with excellent film-forming properties may be produced, enabling the manufacture of a solid-state battery with excellent cycle characteristics, high-rate characteristics, and low-temperature performance.

The viscosity of the composition for forming a cathode active material layer may be about 50 cps to about 3,000 cps, about 100 cps to about 3,000 cps, about 500 cps to about 3,000 cps, about 800 cps to about 3,000 cps, about 1,000 cps to about 3,000 cps, about 1,200 cps to about 2,800 cps, or about 1,500 cps to about 2,500 cps. When a composition having such viscosity is used, a cathode with excellent film-forming properties and physical characteristics may be formed.

The sulfide-based solid electrolyte in the composition for forming a cathode active material layer may include lithium sulfide, silicon sulfide, phosphorus sulfide, boron sulfide, or a combination thereof. The sulfide-based solid electrolyte may be particles. The sulfide-based solid electrolyte particles may include Li₂S, P₂S₅, SiS₂, GeS₂, B₂S₃, or a combination thereof. The sulfide-based solid electrolyte particles may be Li₂S or P₂S₅. The sulfide-based solid electrolyte particles are known to have higher lithium-ion conductivity compared to other inorganic compounds. For example, the sulfide-based solid electrolyte may include Li₂S and P₂S₅. When the sulfide-based solid electrolyte material includes Li₂S and P₂S₅, the molar ratio of Li₂S to P₂S₅ may be in the range of about 50:50 to about 90:10. The sulfide-based solid electrolyte may further include an inorganic solid electrolyte prepared by adding Li₃PO₄, a halogen, a halogen compound, LISICON (Li₂₊₂ₓZn₁₋ₓGeO₄)( -0.36 < x < 0.87), LIPON (Li_{3+γ}PO₄₋ₓN_{y})(0.1< x < 0.5, 0.1 < y<0.5), Thio-LISICON (Li_{3·25}Ge_{0·25}P_{0·75}S₄), LATP (Li₂O-Al₂O₃-TiO₂-P₂O₅), or the like to the above inorganic solid electrolytes. Nonlimiting examples of the sulfide-based solid electrolyte material include: Li₂S-P₂S₅; Li₂S-P₂S₅-LiX (where X is a halogen); Li₂S-P₂S₅-Li₂O; Li₂S-P₂S₅-Li₂O-LiI; Li₂S-SiS₂; Li₂S-SiS₂-LiI; Li₂S-SiS₂-LiBr; Li₂S-SiS₂-LiCl; Li₂S-SiS₂-B₂S₃-LiI; Li₂S-SiS₂-P₂S₅-LiI; Li₂S-B₂S₃; Li₂S-P₂S₅-ZₘSn (where m and n are positive numbers, and Z is Ge, Zn, or Ga); Li₂S-GeS₂; Li₂S-SiS₂-Li₃PO₄; and Li₂S-SiS₂-LipMOq (where p and q are positive numbers, and M is P, Si, Ge, B, Al, Ga, or In). The sulfide-based solid electrolyte material may be prepared by treating a starting material of a sulfide-based solid electrolyte (e.g., Li₂S, P₂S₅, etc.) by melt-quenching or mechanical milling. A calcination process may optionally be performed after the treatment.

The sulfide-based solid electrolyte may have a crystalline structure.

The sulfide-based solid electrolyte may include an argyrodite-type solid electrolyte represented by Formula 2:

Formula 2 Li⁺₁₂₋ₙ₋ₓAⁿ⁺X²⁻₆₋ₓY⁻ₓ

In Formula 2, A is P, As, Ge, Ga, Sb, Si, Sn, Al, In, Ti, V, Nb, or Ta; X is S, Se, or Te; Y is Cl, Br, I, F, CN, OCN, SCN, or N₃; and 1 < n ≤ 5 and 0 < x < 2. The sulfide-based solid electrolyte may be an argyrodite-type compound comprising one or more selected from Li₇₋ₓPS₆₋ₓClₓ (0 ≤ x ≤ 2), Li₇₋ₓPS₆₋ₓBrₓ (0 ≤ x ≤ 2), and Li₇₋ₓPS₆₋ₓIₓ (0 ≤ x ≤ 2). The sulfide-based solid electrolyte may be an argyrodite-type compound including one or more selected from Li₆PS₅Cl, Li₆PS₅Br, and Li₆PS₅I.

According to an embodiment, a composition for forming a solid electrolyte layer for a solid-state battery includes a sulfide-based solid electrolyte, a binder, and a solvent, wherein the solvent includes a C1-C20 alkane compound containing one or more halogen atoms.

The solvent may be of the same type as described for the composition for forming a cathode active material layer.

The content of the solvent may be about 15 parts by weight to about 60 parts by weight, about 15 parts by weight to about 58 parts by weight, about 18 parts by weight to about 56 parts by weight, about 20 parts by weight to about 55 parts by weight, about 25 parts by weight to about 53 parts by weight, or about 30 parts by weight to about 50 parts by weight, based on 100 parts by weight of the solids in the composition for forming a solid electrolyte layer. Here, 100 parts by weight of the solids in the composition for forming a solid electrolyte layer refers to 100 parts by weight of the total content of the sulfide-based solid electrolyte and the binder. When the solvent content is within the above range, a solid electrolyte layer with excellent film-forming properties and physical characteristics may be produced.

In the composition for forming a solid electrolyte layer, side reactions between the solvent and the sulfide-based solid electrolyte may be suppressed, resulting in excellent stability.

The binder may be a polymer or combinations of polymers. The binder may include (meth)acrylic resin, polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, polyester resin, nylon, or a combination thereof. The binder may be an acrylic resin. Such binders have excellent solubility characteristics with respect to the above-described solvent. Examples of acrylic resins include polyacrylic acid and polymethyl methacrylate (PMMA).

The composition for forming a cathode active material layer may further include a compound represented by Formula 11.

Formula 11 R₁-C(=O)O-R₂

In Formula 11, R1 is a C1-C2 alkyl group, and R2 is a C7-C9 alkyl group.

Examples of the compound of Formula 11 may include octyl acetate, nonyl acetate, heptyl acetate, or a combination thereof. Using a solvent further including the compound of Formula 11 may further improve solubility with respect to the binder.

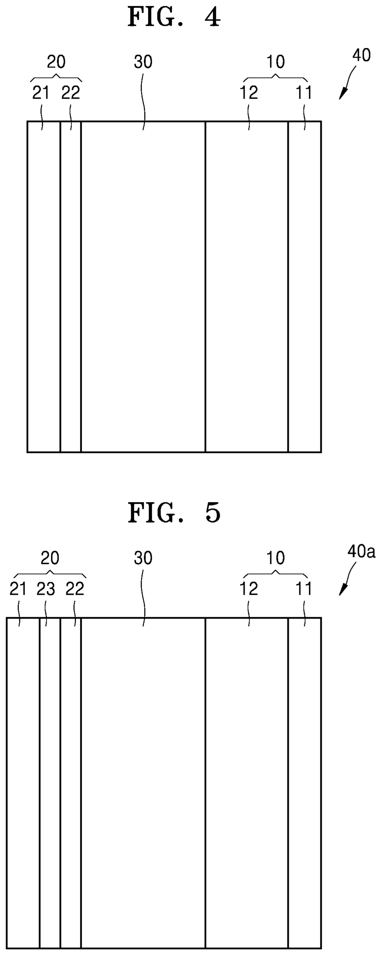

FIGS. 4 and 5 illustrate a solid-state battery according to an embodiment.

The solid-state battery may be an all-solid-state battery, and specifically, an all-solid-state secondary battery.

Referring to FIGS. 4 and 5, the solid-state battery 40, 40a may employ a cathode according to an embodiment.

The solid-state battery may include a cathode 10, a solid electrolyte layer 30, and an anode 20.

### (Cathode)

The cathode 10 may include a cathode current collector 11 and a cathode active material layer 12.

The cathode active material layer 12 may include a cathode active material.

The cathode active material is not particularly limited and may be any material commonly used in solid-state batteries. The cathode active material may be a lithium transition metal oxide or a transition metal sulfide. The lithium transition metal oxide may include one or more composite oxides of lithium and a metal selected from cobalt, manganese, nickel, or a combination thereof. The cathode active material may be a compound represented by any of the following formulas: LiₐA_{1-b}B'_{b}D₂ (wherein 0.90 ≤ a ≤ 1 and 0 ≤ b ≤ 0.5); LiₐE_{1-b}B'_{b}O_{2-c}D_{c} (wherein 0.90 ≤ a ≤ 1, 0 ≤ b ≤ 0.5, 0 ≤ c ≤ 0.05); LiE_{2-b}B'_{b}O_{4-c}D_{c} (wherein 0 ≤ b ≤ 0.5, 0 ≤ c ≤ 0.05); LiₐNi_{1-b-c}Co_{b}B'_{c}D_{α} (wherein 0.90 ≤ a ≤ 1, 0 ≤ b ≤ 0.5, 0 ≤ c ≤ 0.05, and 0 < α ≤ 2); LiₐNi_{1-b-c}Co_{b}B'_{c}O_{2-α}F'_{α} (wherein 0.90 ≤ a ≤ 1, 0 ≤ b ≤ 0.5, 0 ≤ c ≤ 0.05, and 0 < α < 2); LiₐNi_{1-b-c}Mn_{b}B'_{c}D_{α} (wherein 0.90 ≤ a ≤ 1, 0 ≤ b ≤ 0.5, 0 ≤ c ≤ 0.05, 0 < α ≤ 2); LiₐNi_{1-b-c}Mn_{b}B'_{c}O_{2-α'}F'_{α} (wherein 0.90 ≤ a ≤ 1, 0 ≤ b ≤ 0.5, 0 ≤ c ≤ 0.05, and 0 < α < 2); LiₐNi_{b}E_{c}G_{d}O₂ (wherein 0.90 ≤ a ≤ 1, 0 ≤ b ≤ 0.9, 0 ≤ c ≤ 0.5, and 0.001 ≤ d ≤ 0.1); LiₐNi_{b}Co_{c}Mn_{d}GₑO₂ (wherein 0.90 ≤ a ≤ 1, 0 ≤ b ≤ 0.9, 0 ≤ c ≤ 0.5, 0 ≤ d ≤0.5, and 0.001 ≤ e ≤ 0.1); LiₐNiG_{b}O₂ (wherein 0.90 ≤ a ≤ 1, 0.001 ≤ b ≤ 0.1); LiₐCoG_{b}O₂ (wherein 0.90 ≤ a ≤ 1 and 0.001 ≤ b ≤ 0.1); LiₐMnG_{b}O₂ (wherein 0.90 ≤ a ≤ 1 and 0.001 ≤ b ≤ 0.1); LiₐMn₂G_{b}O₄ (wherein 0.90 ≤ a ≤ 1 and 0.001 ≤ b ≤ 0.1); QO₂; QS₂; LiQS₂; V₂O₅; LiV₂O₅; LiI'O₂; LiNiVO₄; Li_{(3-f)}J₂(PO₄)₃ (0 ≤ f ≤ 2); Li_{(3-f)}Fe₂(PO₄)₃ (0 ≤ f ≤ 2); and LiFePO₄. In the above formulas, A may be Ni, Co, Mn, or a combination thereof; B' may be Al, Ni, Co, Mn, Cr, Fe, Mg, Sr, V, a rare earth element, or a combination thereof; D may be O, F, S, P, or a combination thereof; E may be Co, Mn, or a combination thereof; F' may be F, S, P, or a combination thereof; G may be Al, Cr, Mn, Fe, Mg, La, Ce, Sr, V, or a combination thereof; Q may be Ti, Mo, Mn, or a combination thereof; I' may be Cr, V, Fe, Sc, Y, or a combination thereof; and J may be V, Cr, Mn, Co, Ni, Cu, or a combination thereof. Examples of the cathode active material may be LiCoO₂, LiMnₓO₂ₓ(x=1, 2), LiNi₁₋ₓMnₓO₂(0<x<1), LiNi_{1-x-y}CoₓMn_{y}O₂ (0≤x≤0.5, 0≤y≤0.5), LiFePO₄, TiS₂, FeS₂, TiS₃, and FeS₃.

The cathode active material may include lithium transition-metal oxides represented by Formulas 3 to 10:

Formula 3 LiₐNiₓCo_{y}M_{z}O_{2-b}A_{b}

In Formula 3, 1.0 ≤ a ≤ 1.2, 0 ≤ b ≤ 0.2, 0.8 ≤ x < 1, 0 ≤ y ≤ 0.3, 0 < z ≤ 0.3, and x + y + z = 1; M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof; and A may be F, S, Cl, Br, or a combination thereof.

Formula 4 LiNiₓCo_{y}Mn_{z}O₂

Formula 5 LiNiₓCo_{y}Al_{z}O₂

In Formulas 4 and 5, 0.8 ≤ x ≤ 0.95, 0 ≤ y ≤ 0.2, 0 < z ≤ 0.2, and x + y + z = 1.

Formula 6 LiNiₓCo_{y}Mn_{z}Al_{w}O₂

In Formula 6, 0.8 ≤ x ≤ 0.95, 0 ≤ y ≤ 0.2, 0 < z ≤ 0.2, 0 < w ≤ 0.2, and x + y + z + w = 1.

Formula 7 LiₐCoₓM_{y}O_{2-b}A_{b}

In Formula 7, 1.0 ≤ a ≤ 1.2, 0 ≤ b ≤ 0.2, 0.9 ≤ x ≤ 1, 0 ≤ y ≤ 0.1, and x + y = 1; M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof; and A may be F, S, Cl, Br, or a combination thereof.

Formula 8 LiₐNiₓMn_{y}M'₂O_{2-b}A_{b}

In Formula 8, 1.0 ≤ a ≤ 1.2, 0 ≤ b ≤ 0.2, 0 < x ≤ 0.3, 0.5 ≤ y < 1, 0 < z ≤ 0.3, and x + y + z = 1; M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof; and A may be F, S, Cl, Br, or a combination thereof.

Formula 9 LiₐM1ₓM2_{y}PO_{4-b}X_{b}

In Formula 9, 0.90 ≤ a ≤ 1.1, 0 ≤ x ≤ 0.9, 0 ≤ y ≤ 0.5, 0.9 < x + y < 1.1, and 0 ≤ b ≤ 2; M1 may be chromium (Cr), manganese (Mn), iron (Fe), cobalt (Co), nickel (Ni), copper (Cu), zirconium (Zr), or a combination thereof; M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof; and X may be O, F, S, P, or a combination thereof.

Formula 10 LiₐM3_{z}PO₄

In Formula 10, 0.90 ≤ a ≤ 1.1 and 0.9 ≤ z ≤ 1.1; M3 may be chromium (Cr), manganese (Mn), iron (Fe), cobalt (Co), nickel (Ni), copper (Cu), zirconium (Zr), or a combination thereof.

The cathode active material may be coated with a coating layer. The coating layer may be any known coating layer for a cathode active material of a multilayer ceramic battery. The coating layer may be Li₂O-ZrO₂ (LZO).

The particle size of the cathode active material may be about 0.1 µm to about 20 µm, about 0.5 µm to about 10 µm, or about 1 µm to about 5 µm. The cathode active material may be a single crystal particle or a polycrystalline particle.

The shape of the cathode active material may be spherical or ellipsoidal. The particle diameter of the cathode active material is not particularly limited and may fall within a range applicable to cathode active materials of conventional solid-state batteries. The content of the cathode active material in the cathode active material layer 12 is also not particularly limited and may fall within a range generally applicable to the cathode active material layers 12 of solid-state batteries. The content of the cathode active material in the cathode active material layer 12 may be about 80 wt% to about 99 wt%, about 80 wt% to about 95 wt%, or about 80 wt% to about 90 wt% based on the total weight of the cathode active material layer 12.

The cathode current collector 11 may include a metal-based substrate or a carbon-based substrate. As the metal-based substrate, examples include a porous body, mesh, plate, or foil made of stainless steel, nickel (Ni), aluminum (Al), indium (In), copper (Cu), magnesium (Mg), titanium (Ti), iron (Fe), cobalt (Co), nickel (Ni), zinc (Zn), germanium (Ge), lithium (Li), or an alloy thereof. The carbon-based substrate may include one-dimensional carbon-based materials such as carbon fibers or carbon tubes; two-dimensional carbon-based materials such as graphite or graphene; or a combination thereof. The cathode current collector 12 may further include a binder. The binder may be selected from among the binders used in the cathode active material layer 12. The cathode current collector 11 may be omitted.

The cathode active material layer 12 may contain a binder.

The binder may serve to bond the cathode active material particles to one another and also to adhere the cathode active material to the current collector. Examples of the binder include (meth)acrylic resin, polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, polyester resin, nylon, and the like, but are not limited thereto.

The conductive material is used to impart conductivity to the electrode and may be any electronically conductive material that does not cause a chemical reaction in the battery. Examples of the conductive material include carbon-based materials such as natural graphite, artificial graphite, carbon black, acetylene black, Ketjen black, carbon fibers, carbon nanofibers, or carbon nanotubes; metal-based materials in the form of metal powders or metal fibers containing copper, nickel, aluminum, silver, and the like; conductive polymers such as polyphenylene derivatives; or a mixture thereof.

In addition to the above-described cathode active material, solid electrolyte, binder, and conductive material, the cathode may further include additives such as a filler, a coating agent, a dispersing agent, or an ionic conductivity enhancer. Materials usable as the filler, coating agent, dispersing agent, or ionic conductivity enhancer that may be included in the cathode may include any materials known to be used in the cathodes of solid-state batteries.

The D50 average particle diameter of the solid electrolyte included in the cathode active material layer 12 may be smaller than that of the solid electrolyte contained in the solid electrolyte layer 30. The D50 average particle diameter of the solid electrolyte in the cathode active material layer 12 may be not more than 90 %, 80 %, 70 %, 60 %, 50 %, 40 %, 30 %, or 20 % of the D50 average particle diameter of the solid electrolyte in the solid electrolyte layer 30.

### (Solid Electrolyte Layer)

The solid electrolyte layer 30 may be disposed between the cathode 10 and the anode 20.

The solid electrolyte layer may include the solid electrolyte layer according to an embodiment.

The solid electrolyte layer may further include one or more selected from oxide-based solid electrolytes, halide-based solid electrolytes, oxyhalide-based solid electrolytes, or a combination thereof.

The solid electrolyte layer may include a sulfide-based solid electrolyte.

The sulfide-based solid electrolyte may include Li₂S-P₂S₅; Li₂S-P₂S₅-LiX (where X is a halogen); Li₂S-P₂S₅-Li₂O; Li₂S-P₂S₅-Li₂O-LiI; Li₂S-SiS₂; Li₂S-SiS₂-LiI; Li₂S-SiS₂-LiBr; Li₂S-SiS₂-LiCl; Li₂S-SiS₂-B₂S₃-LiI; Li₂S-SiS₂-P₂S₅-LiI; Li₂S-B₂S₃; Li₂S-P₂S₅-ZₘSn (where m and n are positive numbers and Z is Ge, Zn, or Ga); Li₂S-GeS₂; Li₂S-SiS₂-Li₃PO₄; and Li₂S-SiS₂-LipMOq (where p and q are positive numbers and M is P, Si, Ge, B, Al, Ga, or In). In this context, the sulfide-based solid electrolyte material may be prepared by processing a starting material of a sulfide-based solid electrolyte (e.g., Li₂S, P₂S₅, etc.) by a melt quenching method, mechanical milling, or the like.

A heat treatment process may also be performed after processing.

The sulfide-based solid electrolyte may be amorphous, crystalline, or a mixture thereof. The solid electrolyte may include at least sulfur (S), phosphorus (P), and lithium (Li) as constituent elements from among the above-described sulfide-based solid electrolyte materials. The solid electrolyte may be a material comprising Li₂S-P₂S₅. When Li₂S-P₂S₅ is used as the sulfide-based solid electrolyte material for forming the solid electrolyte, the mixing molar ratio of Li₂S to P₂S₅ may be in a range of about 50:50 to about 90:10.

The sulfide-based solid electrolyte may be an argyrodite-type compound including one or more selected from Li₇₋ₓPS₆₋ₓClₓ (0 ≤ x ≤ 2), Li₇₋ₓPS₆₋ₓBrₓ (0< x ≤ 2), and Li₇₋ₓPS₆₋ₓIₓ (0 < x ≤ 2). The sulfide-based solid electrolyte may be an argyrodite-type compound including one or more selected from Li₆PS₅Cl, Li₆PS₅Br, and Li₆PS₅I.

The density of the argyrodite-type solid electrolyte may be about 1.5 g/cc to about 2.0 g/cc. When the argyrodite-type solid electrolyte has a density of 1.5 g/cc or more, the internal resistance of the all-solid-state secondary battery may be reduced, and penetration of the solid electrolyte by lithium may be effectively suppressed. The elastic modulus of the solid electrolyte may be about 15 GPa to about 35 GPa.

The solid electrolyte layer may include a binder. The binder may be the same as that used in the cathode.

### (Anode)

Referring to FIG. 4, the anode 20 includes an anode current collector 21 and a first anode active material layer 22.

The anode current collector 21 may be in the form of a plate or a foil.

The first anode active material layer may include a carbon-based anode active material, a first metal, a metalloid, or a combination thereof.

The carbon-based anode active material in the first anode active material layer may include amorphous carbon. Examples of the amorphous carbon include, but are not limited to, carbon black (CB), acetylene black (AB), furnace black (FB), Ketjen black (KB), graphene, carbon nanotubes, and carbon nanofibers, and any carbon classified as amorphous carbon in the art may be used.

The first metal or metalloid may include one or more selected from indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), palladium (Pd), silver (Ag), and zinc (Zn), but is not limited thereto, and any metal or metalloid anode active material capable of forming an alloy or compound with lithium in the art may be used.

The first anode active material layer may include either a single type of anode active material selected from carbon-based materials and metal or metalloid anode active materials, or a mixture of two or more different types of anode active materials. The first anode active material layer may include only amorphous carbon, or may include one or more metals or metalloids selected from indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), palladium (Pd), silver (Ag), and zinc (Zn). Alternatively, the first anode active material layer may include a composite of amorphous carbon and one or more of the above-described metal or metalloid anode active materials. The compounding ratio of the composite of amorphous carbon and silver may be, in terms of weight ratio, about 10:1 to about 1:2, about 5:1 to about 1:1, or about 4:1 to about 2:1, although not limited to these ranges, and may be selected depending on the desired characteristics of the solid-state battery. By having such a composition, the first anode active material layer further enhances the cycle characteristics of the solid-state battery.

The anode active material included in the first anode active material layer may include a mixture of first particles composed of amorphous carbon and second particles composed of a metal or a metalloid. The mixture may be a simple physical mixture of the first and second particles, or a mixture in which the particles are physically bound by a binder. The content of the second particles may be about 8 wt% to about 60 wt%, about 10 wt% to about 50 wt%, about 15 wt% to about 40 wt%, or about 20 wt% to about 30 wt% based on the total weight of the mixture. When the second particles are present within the aforementioned ranges, the cycle characteristics of the solid-state battery may be further improved.

The first anode active material layer may include:
(i) a composite of first particles composed of amorphous carbon and second particles composed of a metal or a metalloid; or (ii) a mixture of first particles composed of amorphous carbon and second particles composed of a metal or a metalloid, wherein the content of the second particles is about 1 wt% to about 60 wt% based on the total weight of the composite or the mixture.

The thickness of the first anode active material layer may be about 10 nm to about 10 µm, about 100 nm to about 10 µm, about 200 nm to about 10 µm, about 300 nm to about 10 µm, about 400 nm to about 10 µm, about 500 nm to about 10 µm, about 1 µm to about 10 µm, about 1 µm to about 9 µm, about 1 µm to about 8 µm, about 2 µm to about 7 µm, or about 3 µm to about 7 µm. When the first anode active material layer has a thickness within the aforementioned range, short-circuiting of the all-solid-state secondary battery may be suppressed and cycle characteristics may be improved.

Alternatively, the first anode active material layer 22 may include a composite anode active material. The composite anode active material may include a carbon-based support and a metal-based anode active material supported on the carbon-based support. Because the composite anode active material has such a structure, localization of the metal-based anode active material within the first anode active material layer may be prevented, allowing for a uniform distribution. As a result, the cycle characteristics of the solid-state battery including the first anode active material layer 22 may be further improved.

The metal-based anode active material supported on the carbon-based support may include a metal, a metal oxide, a composite of a metal and a metal oxide, or a combination thereof. The metal may include gold (Au), platinum (Pt), palladium (Pd), silicon (Si), silver (Ag), aluminum (Al), bismuth (Bi), tin (Sn), tellurium (Te), and zinc (Zn). The metal oxide may include gold (Au) oxide, platinum (Pt) oxide, palladium (Pd) oxide, silicon (Si) oxide, silver (Ag) oxide, aluminum (Al) oxide, bismuth (Bi) oxide, tin (Sn) oxide, tellurium (Te) oxide, and zinc (Zn) oxide. The metal oxide may include one or more selected from AuₓO_{y} (0 < x ≤ 2, 0 < y ≤ 3), PtₓO_{y} (0 < x ≤ 1, 0 < y ≤ 2), PdₓO_{y} (0 < x ≤ 1, 0 < y ≤ 1), SiₓO_{y} (0 < x ≤ 1, 0 < y ≤ 2), AgₓO_{y} (0 < x ≤ 2, 0 < y ≤ 1), AlxOy (0 < x ≤ 2, 0 < y ≤ 3), BiₓO_{y} (0 < x ≤ 2, 0 < y ≤ 3), SnₓO_{y} (0 < x ≤ 1, 0 < y ≤ 2), TexOy (0 < x ≤ 1, 0 < y ≤ 3), and ZnₓO_{y} (0 < x ≤ 1, 0 < y ≤ 1). The composite of a metal and metal oxide may include a composite of Au and AuₓO_{y} (0 < x ≤ 2, 0 < y ≤ 3), a composite of Pt and PtₓO_{y} (0 < x ≤ 1, 0 < y ≤ 2), a composite of Pd and PdₓO_{y} (0 < x ≤ 1, 0 < y ≤ 1), a composite of Si and SiₓO_{y} (0 < x ≤ 1, 0 < y ≤ 2), a composite of Ag and AgₓO_{y} (0 < x ≤ 2, 0 < y ≤ 1), a composite of Al and AlₓO_{y} (0 < x ≤ 2, 0 < y ≤ 3), a composite of Bi and BiₓO_{y} (0 < x ≤ 2, 0 < y ≤ 3), a composite of Sn and SnₓO_{y} (0 < x ≤ 1, 0 < y ≤ 2), a composite of Te and TeₓO_{y} (0 < x ≤ 1, 0 < y ≤ 3), a composite of Zn and ZnₓO_{y} (0 < x ≤ 1, 0 < y ≤ 1), or a combination thereof.

The carbon-based support may be amorphous carbon. Examples of the amorphous carbon include, but are not limited to, carbon black (CB), acetylene black (AB), furnace black (FB), Ketjen black (KB), graphene, activated carbon, carbon nanofibers (CNF), and carbon nanotubes (CNT). Any carbon classified as amorphous in the art may be used. Amorphous carbon refers to carbon that has no crystallinity or very low crystallinity, and is distinct from crystalline carbon or graphite-based carbon. The carbonaceous material may be a carbon-based anode active material.

As shown in FIG. 5, in a solid-state battery according to an embodiment, a second anode active material layer 23 may be disposed between the anode current collector 21 and the first anode active material layer 22.

The second anode active material layer 23 may be placed during battery assembly, or may not be present during assembly and instead may form as a precipitation layer after charging.

The second anode active material layer may include a second metal material.

The metal material may be a second metal, a lithium alloy of the second metal, or a combination thereof.

The second metal may include one or more selected from lithium, silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), lanthanum (La), tungsten (W), tellurium (Te), and lithium alloys.

The lithium alloy may include lithium and one or more selected from silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), lanthanum (La), tungsten (W), and tellurium (Te), or a combination thereof.

The second anode active material layer may be a lithium metal layer or a third metal coated on the current collector. Alternatively, it may be a lithium metal or lithium alloy layer deposited during charging. The volume and thickness of the second anode active material layer may increase due to lithium deposition during charging. In addition, during the charge-discharge process of the all-solid-state secondary battery, the second metal may form a Li-M₂ alloy through a reversible reaction. In the charging step, the placement step, or both steps of the all-solid-state secondary battery, the second anode active material layer may be formed as a precipitation layer or a deposition layer, and may be a lithium metal layer or a lithium metal alloy layer.

In the charging step, the placement step, or both steps of the all-solid-state secondary battery, the second metal in the second anode active material layer forms an alloy with lithium.

The process may include placing, for example, bonding the second anode active material layer onto the first anode active material layer through pressing. During the pressing process, a portion of the lithium included in the second anode active material layer may be injected into the first anode active material layer.

The placement (e.g., bonding) may be carried out by a compression pressing process. During the pressing, a portion of the lithium contained in the second anode active material layer may be injected into the first anode active material layer.

According to another embodiment, the second anode active material layer may be further formed as a precipitation layer during the charging stage, the placement stage, or both stages of the solid-state battery. The second anode active material layer may be a lithium metal layer or a lithium metal alloy layer. The thickness of the second anode active material layer may be 1 µm or more, 5 µm or more, 10 µm or more, about 10 µm to about 1,000 µm, about 10 µm to about 500 µm, about 10 µm to about 200 µm, about 10 µm to about 100 µm, or about 10 µm to about 50 µm.

The anode current collector 21 may be formed of a material that does not react with lithium, that is, does not form an alloy or compound with lithium. Examples of the material constituting the anode current collector 21 include copper (Cu), stainless steel, titanium (Ti), iron (Fe), cobalt (Co), and nickel (Ni), but are not limited thereto; any material commonly used as an electrode current collector in the art may be used. The thickness of the anode current collector may be about 1 µm to about 20 µm about 5 µm to about 15 µm, or about 7 µm to about 10 µm. The anode current collector 21 may be formed of one type of the aforementioned metals, an alloy of two or more types metals thereof, or a covering material. The anode current collector 21 may be in the form of a plate or a foil.

According to an embodiment, the solid-state battery may employ a non-precipitation type anode.

The first anode active material layer 22 may contain an anode active material. The anode active material layer may further include a conductive material and a binder.

The anode active material may include one or more selected from lithium metal, a lithium metal alloy, a metal alloyable with lithium, a transition metal oxide, a non-transition metal oxide, and a carbon-based material. The lithium metal alloy may be, an alloy of lithium with another metal, such as indium. Examples of the metal alloyable with lithium may include Si, Sn, Al, Ge, Pb, Bi, Sb, an Si-Y' alloy (Y' is an alkali metal, an alkaline earth metal, a Group 13 element, a Group 14 element, , a Group 15 element, a Group 16 element, a transition metal, a rare-earth element, or a combination thereof, but is not Si), an Sn-Y' alloy (Y' is an alkali metal, an alkaline earth metal, a Group 13 element, a Group 14 element, , a Group 15 element, a Group 16 element, a transition metal, a rare-earth element, or a combination thereof, but is not Sn), and the like. Y' may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof. Examples of the transition metal oxide may include a lithium-titanium oxide, a vanadium oxide, a lithium-vanadium oxide, and the like. Examples of the non-transition metal may be SnO₂, SiOₓ (0 < x < 2), and the like.

The carbon-based material may be crystalline carbon, amorphous carbon, or a mixture thereof. Examples of the crystalline carbon may include graphite, such as artificial graphite or natural graphite in shapeless, plate, flake, spherical or fiber form. Examples of the amorphous carbon may include soft carbon (low-temperature calcined carbon) or hard carbon, mesophase pitch carbides, calcined cokes, and the like. The anode active material may include silicon oxide, a silicon-based alloy, a silicon-carbon composite, tin, a tin-based alloy, a tin-carbon composite, a metal oxide, or a combination thereof.

The first anode active material layer may further include a solid electrolyte. The solid electrolyte may include an oxide-based solid electrolyte, a sulfide-based solid electrolyte, or a combination thereof.

### (Preparation of Cathode)

A composition for forming a cathode active material layer may be prepared by adding a cathode active material, a binder, a conductive material, and a solvent, which are the components of the cathode active material layer 12. The composition may be in the form of a slurry. The prepared composition for forming a cathode active material layer may be coated onto the cathode current collector 11 and dried.

Alternatively, the composition may be cast onto a separate support, and a film obtained by peeling the cast layer from the support may be laminated onto the cathode current collector 11 to form the cathode 10.

The solvent in the composition for forming a cathode active material layer may contain a C1-C20 alkane compound containing one or more halogen atoms. The content of the solvent may be about 15 parts by weight to about 60 parts by weight, about 15 parts by weight to about 58 parts by weight, about 18 parts by weight to about 56 parts by weight, about 20 parts by weight to about 55 parts by weight, about 25 parts by weight to about 53 parts by weight, or about 30 parts by weight to about 50 parts by weight, based on 100 parts by weight of the solids in the composition. Here, 100 parts by weight of the solids refers to the combined content of the cathode active material, solid electrolyte, conductive material, and binder. The solid electrolyte may contain a sulfide-based solid electrolyte.

The coating may be performed using a spin coating method, a doctor blade method, or a slurry casting method.

Drying may be carried out under atmospheric and/or vacuum conditions at about 25 °C to about 100 °C, about 30 °C to about 90 °C, or about 40 °C to about 80 °C.

The drying may include a primary drying and a secondary drying. The primary drying may involve heat treatment at about 50 °C to about 100 °C, about 60 °C to about 95 °C, about 85 °C to about 95 °C, or about 90 °C. The time for the heat treatment may vary depending on the heat treatment temperature, but may be for about 10 minutes to about 30 minutes, about 20 minutes to about 30 minutes, or 30 minutes.

The primary drying may be performed at a higher temperature than the secondary drying, and drying at such temperatures may suppress side reactions caused by the solvent.

The secondary drying may be carried out under vacuum conditions and may be performed at about 25 °C to about 90 °C, about 30 °C to about 85 °C, about 50 °C to about 80 °C, or about 70 °C. The time for the heat treatment may vary depending on the drying temperature but may be about 1 hours to about 24 hours, about 2 hours to about 20 hours, about 2 hours to about 10 hours, about 2 hours to about 5 hours, or 2 hours. When the drying is performed under the aforementioned conditions, a cathode active material layer having uniform thickness and composition may be produced.

The cathode current collector may be omitted. The cathode current collector may further include a carbon layer disposed on one or both surfaces of the metal substrate. By additionally placing a carbon layer on the metal substrate, corrosion of the metal by the solid electrolyte contained in the cathode layer may be prevented, and interfacial resistance between the cathode active material layer and the current collector may be reduced. The thickness of the carbon layer may be about 0.1 µm to about 5 µm, about 0.1 µm to about 3 µm, or about 0.1 µm to about 1 µm. If the carbon layer is excessively thin, it may be difficult to completely block contact between the metal substrate and the solid electrolyte. If the carbon layer is excessively thick, the energy density of the all-solid-state secondary battery may be reduced. The carbon layer may include amorphous carbon, crystalline carbon, or the like.

The obtained laminate may be pressed to produce the cathode 10. The pressing may be carried out using roll pressing, flat pressing, or isostatic pressing, but is not limited to these methods. Any pressing method commonly used in the art may be employed. The pressing process may be omitted. Alternatively, the cathode 10 may be fabricated by compressing the mixture of materials forming the cathode active material layer 12 into a pellet or by shaping the mixture into a sheet. When the cathode 10 is fabricated in this manner, the cathode current collector 11 may be omitted. Alternatively, the cathode 10 may be used in an impregnated state with a liquid electrolyte.

### (Preparation of Solid Electrolyte Layer)

First, a composition for forming a solid electrolyte layer for a solid-state battery is prepared, the composition including a sulfide-based solid electrolyte, a binder, and a solvent.

According to an embodiment, the solvent may include a C1-C20 alkane compound containing one or more halogen atoms.

According to another embodiment, the solvent may be a compound represented by Formula 11:

Formula 11 R₁-C(=O)O-R₂

In Formula 11, R1 may be a C1-C2 alkyl group, and R2 may be a C7-C9 alkyl group.

Examples of the compound of Formula 11 include octyl acetate, nonyl acetate, heptyl acetate, or a combination thereof.

The prepared composition for forming a solid electrolyte layer may then be coated and dried on a substrate to form a solid electrolyte layer. The substrate may be a release film and may refer to an electrode of the solid-state battery. When the substrate is a release film, the solid electrolyte layer may be separated and removed from the release film to prepare the solid electrolyte layer.

The drying may include a heat treatment process under vacuum conditions at about 25 °C to about 100 °C, about 30 °C to about 90 °C, or about 30 °C to about 80 °C.

The drying may be carried out under vacuum conditions at about 25 °C to about 90 °C, about 30 °C to about 85 °C, about 50 °C to about 80 °C, or about 70 °C. The heat treatment time may vary depending on the heat treatment temperature, but may be about 1 to about 24 hours, about 2 to about 20 hours, about 2 to about 10 hours, about 2 to about 5 hours, or about 2 hours. When drying is conducted under the aforementioned conditions, a solid electrolyte layer with uniform thickness and composition may be produced.

### (Preparation of Anode)

The anode 20 may be prepared by the following method.

A composition for forming an anode active material layer may be prepared by mixing an anode active material, a conductive material, a binder, and a solvent.

The composition for forming the anode active material layer may be directly coated and dried on the anode current collector 21 to prepare the anode 20, or may be cast onto a separate support and peeled off to form a film, which is then laminated onto the anode current collector 21 to obtain the anode 20.

Alternatively, the anode active material composition may be prepared in the form of an electrode ink containing an excess amount of solvent and printed onto the anode current collector 21 by an inkjet method or a gravure printing method to manufacture the anode 20. The printing method is not limited to the aforementioned examples, and any method commonly used for coating or printing may be employed.

### (Preparation of Solid-State Battery)

A solid-state battery according to an embodiment may be fabricated by the following process.

First, a cathode active material, a binder, a sulfide-based solid electrolyte, and a solvent may be mixed to prepare a composition for forming a cathode active material layer.

Next, the composition for forming a cathode active material layer may be coated and dried on a cathode current collector to form the cathode active material layer and prepare a cathode.

Separately, an anode current collector may be prepared.

A solid electrolyte layer including a sulfide-based solid electrolyte may be positioned between the cathode and the anode current collector to prepare a laminate, and the laminate may be pressed to fabricate the all-solid-state battery.

The solvent may include a C1-C20 alkane compound containing one or more halogen atoms.

The process may further include forming a first anode active material layer between the anode current collector and the solid electrolyte layer.

The pressing may be carried out using roll pressing, uniaxial pressing, flat pressing, warm isotactic pressing (WIP), or cold isostatic pressing (CIP). Without being limited to these methods, any pressing method commonly used in the art may be employed. The pressure applied during pressing may be about 50 MPa to about 750 MPa. The pressing time may range from about 5 milliseconds to about 60 minutes. The pressing may be performed at a temperature of room temperature to not more than 90 °C, at about 10 °C to about 90 °C, at about 15 °C to about 90 °C, or at about 20 °C to about 90 °C. Alternatively, the pressing may be performed at a high temperature of 100 °C or more.

Next, the cathode 10 may be placed on the opposite side of the solid electrolyte layer 30 to which the anode 20 is already bonded, and the cathode 10 may be pressed, for example, bonded, onto the opposite surface of the solid electrolyte layer 30 under a predetermined pressure. Alternatively, if the cathode 10 is impregnated with a liquid electrolyte, the battery may be fabricated by stacking without pressing.

The pressing may be carried out using roll pressing, uniaxial pressing, flat pressing, warm isotactic pressing (WIP), or cold isostatic pressing (CIP), but without being limited to these methods, any pressing method commonly used in the art may be employed. The pressure applied during pressing may be about 50 MPa to about 750 MPa. The duration of pressure application may be about 5 milliseconds to about 60 minutes. The pressing may be performed at a temperature ranging from room temperature to not more than 90 °C, at about 10 °C to about 90 °C, at about 15 °C to about 90 °C, or at about 20 °C to about 90 °C. Alternatively, the pressing may be performed at a high temperature of 100 °C or more.

The following description provides specific examples and comparative examples for illustrative purposes, but the present disclosure is not limited to these examples.

### Example 1 (Solvent: 1-Bromooctane)

### (Cathode)

LiNi₀.₈Co₀.₁₅Al₀.₀₅O₂ (NCA) (D₅₀=14 µm) was prepared as the cathode active material.

As the solid electrolyte, a crystalline argyrodite-type solid electrolyte powder (Li₆PS₅Cl) was prepared. Carbon nanofibers (CNF) were prepared as the conductive material, and an acrylic resin (weight average molecular weight: 100,000 to 500,000 Dalton) was prepared as the binder. These materials were mixed in a weight ratio of cathode active material : solid electrolyte : conductive material : binder = 84 : 14.8 : 0.2 : 1.0, and mixed with 1-bromooctane as the solvent to prepare a slurry-type composition for forming a cathode active material layer. The content of 1-bromooctane was 49 parts by weight based on 100 parts by weight of the total solids in the composition for forming a cathode active material layer. Here, 100 parts by weight of the total solids refers to the combined content of the cathode active material, solid electrolyte, conductive material, and binder. The viscosity of the composition for forming a cathode active material layer was 2,000 cps.

The cathode was prepared by coating and drying the composition on a cathode current collector made of aluminum foil with a carbon coating and having a thickness of 18 µm, thereby forming a cathode active material layer. The drying process included a primary drying and a secondary drying: the primary drying was performed by heat-treating in an oven at 90 °C for 30 minutes, and the secondary drying was performed by heat-treating the primary-dried product at 75 °C under vacuum conditions for 2 hours. The thickness of the resulting cathode active material layer was about 100 µm (cathode: 4 mAh/cm² L/L).

### (Anode)

As the anode, a carbon-silver (AgC) anode prepared by the following procedure was used.

The AgC anode was prepared by forming a 10 µm-thick anode active material layer containing a composite (AgC) containing a carbon-based active material and silver (Ag) on a 10 µm-thick stainless steel substrate.

The anode active material layer was prepared by mixing carbon black (CB), a carbon-based material having a particle diameter of about 38 nm, with silver (Ag) particles having an average particle diameter of about 60 nm, in a weight ratio of 3:1 to obtain a powder mixture. To this powder mixture (4 g), 6 g of an NMP solution containing 5 wt% polyvinylidene fluoride (PVDF) binder was added, and additional N-methyl-2-pyrrolidone (NMP) was gradually added with stirring to prepare an anode slurry. The anode slurry was applied to a stainless steel substrate using a blade coater and dried in air at 80 °C for 20 minutes. Vacuum-drying was then performed at 100 °C for 12 hours to prepare the anode.

### Solid Electrolyte Layer

A mixture was prepared by adding 5 parts by weight of an acrylic binder (Zeon A751, weight average molecular weight 100,000 to 500,000 Dalton) as a binder to 90 parts by weight of crystalline Li₆PS₅Cl solid electrolyte (D50 = 3.0 µm), which is an argyrodite-type crystal. Octyl acetate was added to the prepared mixture with stirring to prepare a slurry. The prepared slurry was applied onto a nonwoven fabric placed on a polyethylene terephthalate (PET) substrate using a bar coater and dried in air at 80 °C for 10 minutes to prepare a laminate. The prepared laminate was then vacuum-dried at 80 °C for 2 hours and subsequently separated from the substrate to obtain a solid electrolyte layer. The solid electrolyte layer was a solid electrolyte self-standing film.

The solid electrolyte layer was placed on top of the cathode to prepare a laminate. The prepared laminate was subjected to warm isostatic pressing (WIP) at 85 °C under a pressure of 500 MPa for 30 minutes to form a cathode/solid electrolyte layer structure by pressing. After pressing, the thickness of the solid electrolyte layer was about 50 µm.

The cathode/solid electrolyte layer structure and the anode were sequentially stacked to form a laminate, which was then subjected to warm isotactic pressing (WIP) at 85 °C under a pressure of 200 MPa for 30 minutes to obtain a cathode/solid electrolyte layer/anode structure, thereby completing the all-solid-state secondary battery.

### Example 2 (Solvent: 1-Chlorooctane)

The cathode and the all-solid-state secondary battery were prepared in the same manner as in Example 1, except that 1-chlorooctane was used instead of 1-bromooctane in the preparation of the composition for forming a cathode active material layer, and the content of 1-chlorooctane was 53 parts by weight based on 100 parts by weight of the total solids in the composition.

### Example 3 (Solvent: 1-lodohexane)

The cathode and the all-solid-state secondary battery were prepared in the same manner as in Example 1, except that 1-iodohexane was used instead of 1-bromooctane in the preparation of the composition for forming a cathode active material layer, and the content of 1-iodohexane was 45 parts by weight based on 100 parts by weight of the total solids in the composition.

### Example 4 (Solvent: 1,6-Dichlorohexane)

The cathode and the all-solid-state secondary battery were prepared in the same manner as in Example 1, except that 1,6-dichlorohexane was used instead of 1-bromooctane in the preparation of the composition for forming a cathode active material layer, and the content of 1,6-dichlorohexane was 52 parts by weight based on 100 parts by weight of the total solids in the composition.

### Example 5 (Solvent: 1-Bromododecane)

The cathode and the all-solid-state secondary battery were prepared in the same manner as in Example 1, except that 1-bromododecane was used instead of 1-bromooctane in the preparation of the composition for forming a cathode active material layer, and the content of 1-bromododecane was 50 parts by weight based on 100 parts by weight of the total solids in the composition.

### Comparative Example 1 (Solvent: Xylene)

The cathode and the all-solid-state secondary battery were prepared in the same manner as in Example 1, except that xylene was used instead of 1-bromooctane in the preparation of the composition for forming a cathode active material layer, and the content of xylene was 50 parts by weight based on 100 parts by weight of the total solids in the composition.

### Comparative Example 2 (Solvent: Octyl Acetate)

The cathode and the all-solid-state secondary battery were prepared in the same manner as in Example 1, except that octyl acetate was used instead of 1-bromooctane in the preparation of the composition for forming a cathode active material layer, and the content of octyl acetate was 51 parts by weight based on 100 parts by weight of the total solids in the composition.

### Comparative Example 3 (Solvent: Dodecane)

The cathode and the all-solid-state secondary battery were prepared in the same manner as in Example 1, except that dodecane was used instead of 1-bromooctane in the preparation of the composition for forming a cathode active material layer, and the content of dodecane was 48 parts by weight based on 100 parts by weight of the total solids in the composition.

The solvents used in Examples 1 to 5 and Comparative Examples 1 to 3, along with their boiling points, dielectric constants, dipole moments, and Hansen solubility parameters, are shown in Table 1 below.

**Table 1**

| Item | Solvent | Boiling Point (°C) | Dielectric Constant | Dipole Moment | δ (MPa ^{1/2}) |
|---|---|---|---|---|---|
| Example 1 | 1-Bromooctane | 201 | 4.5 | 1.7 | 1.7 |
| Example 2 | 1-Chlorooctane | 183 | 5.6 | 1.9 | 2.0 |
| Example 3 | 1-lodohexane | 181 | 4.3 | 1.4 | 1.4 |
| Example 4 | 1,6-Dichlorohexane | 204 | 7.0 | 2.3 | 2.4 |
| Example 5 | 1-Bromododecane | 276 | 5.3 | 1.7 | 1.6 |
| Comparative Example 1 | Xylene | 139 | 2.3 | 0 | 0 |
| Comparative Example 2 | Octyl Acetate | 211 | 4.9 | 1.8 | 2.9 |
| Comparative Example 3 | Dodecane | 216 | 2.0 | 0 | 0 |

### Evaluation Example 1: Charge-Discharge Characteristics

The charge-discharge characteristics of the all-solid-state secondary batteries prepared in Example 1 and Comparative Example 3 were evaluated by the following charge-discharge test. The charge-discharge test was conducted by placing the all-solid-state secondary battery in a thermostatic chamber maintained at 25 °C. To confirm reproducibility, three cells were fabricated for each of the batteries prepared in Example 1 and Comparative Example 3, and the cell characteristics were evaluated.

Each battery was charged at a constant current of 0.1 C rate at 25 °C until the voltage reached 4.3 V (vs. Li) and then charged in constant voltage mode at 4.3 V until the current dropped to a cut-off level corresponding to 0.05 C rate. Subsequently, the battery was discharged at a constant current of 0.1 C rate until the voltage reached 2.5 V (vs. Li) (the formation cycle).

The all-solid-state secondary battery that had undergone the formation cycle was charged at 25 °C at a constant current of 0.2 C rate until the voltage reached 4.3 V (vs. Li). Subsequently, the battery was discharged at a constant current of 0.1 C rate until the voltage reached 2.5 V (vs. Li) (first cycle).

After the first cycle, the battery was charged again at 25 °C at a constant current of 0.1 C rate until the voltage reached 4.3 V (vs. Li). Then, it was discharged at a constant current of 0.33 C rate until the voltage reached 2.5 V (vs. Li) (second cycle).

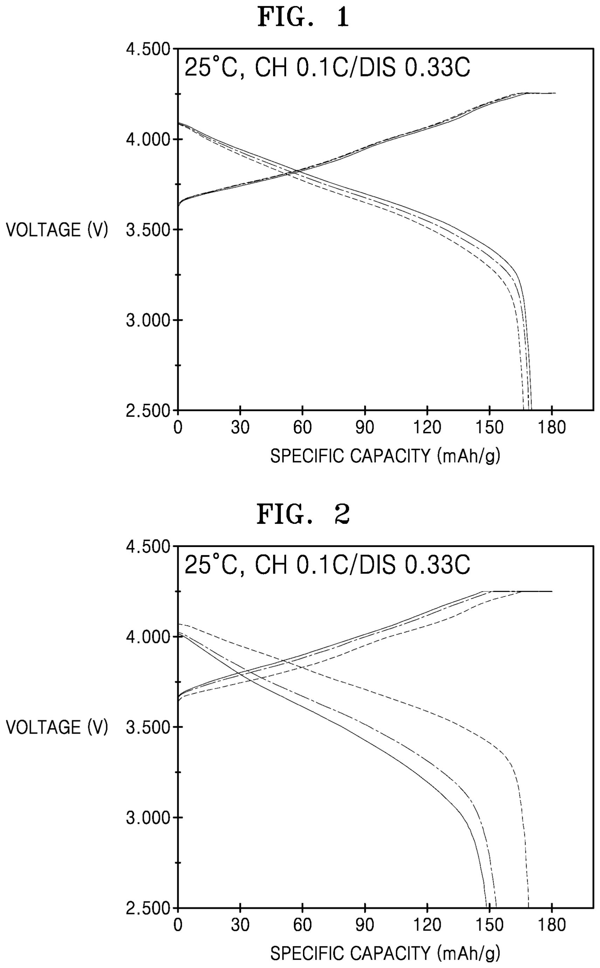

The measurement results are shown in Table 2 and FIGS. 1 and 2. FIGS. 1 and 2 are graphs showing the change in voltage with respect to specific capacity for the all-solid-state secondary batteries of Example 1 and Comparative Example 3, respectively.

### Evaluation Example 2: Direct Current Internal Resistance (DC-IR) Evaluation

The direct current internal resistance (DC-IR) of the all-solid-state secondary batteries prepared in Example 1 and Comparative Example 3 was measured using the following method.

After charging to a voltage corresponding to 20 % state of charge (SOC) at a current of 0.2 C in the first cycle,
the battery was discharged at a constant current of 3.0 C for 10 seconds, then at 0.2 C for 10 seconds, and finally again at 3.0 C for 10 seconds.

The DC-IR (R = ΔV / ΔI) was calculated based on the ratio of the average voltage change (ΔV) to the average current change (ΔI) during each constant-current discharge, and the average of these values was taken as the measured result.

A portion of the DC-IR measurement results is shown in Table 2.

**Table 2**

| Item | Solvent | Cell number | 0.33C Discharge (mAh/g) | DCIR (Ω·cm²) |
|---|---|---|---|---|
| Example 1 | 1-Bromooctane | 1 | 166 | 32.8 |
| | | 2 | 170 | 31.5 |
| | | 3 | 169 | 34.2 |
| Comparative Example 3 | Dodecane | 1 | 169 | 45.1 |
| | | 2 | 149 | 73.5 |
| | | 3 | 153 | 66.3 |

With FIGS. 1, 2, and Table 2 as reference, the all-solid-state secondary battery of Example 1 exhibited improved discharge uniformity and suppressed increase in internal resistance when compared to Comparative Example 3. In particular, the battery of Example 1 showed reduced variation in DC-IR among the three cells, unlike Comparative Example 3, which showed variation of greater than 10 between the three cells. These results are attributed to improved uniformity in the cathode, resulting from enhanced dispersion of the solids in the cathode active material layer.

### Evaluation Example 3: Stability

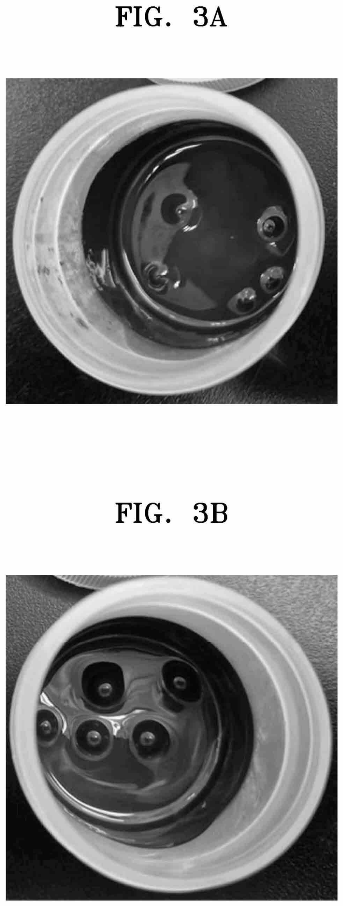

Compositions for forming a cathode active material layer were prepared according to Example 1 and Comparative Examples 1 and 2 and left in a dry room at 25 °C for 3 days. After the drying period, the formation of by-products due to side reactions and phase separation phenomena were visually observed. Part of the results from the stability evaluation of the compositions for forming a cathode active material layer is shown in FIGS. 3A and 3B. FIGS. 3A and 3B are photographs showing the results of the stability evaluation of the compositions from Example 1 and Comparative Example 2, respectively.

It was observed that the composition for forming a cathode active material layer of Comparative Example 1, which contains highly volatile xylene, exhibited an increase in viscosity during preparation of the slurry.

As shown in FIG. 3B, the composition for forming a cathode active material layer of Comparative Example 2 exhibited the formation of slurry by-products after 3 days. From this, it was confirmed that when octyl acetate is used as the solvent, side reactions occur between the solvent and the sulfide-based solid electrolyte, and phase separation is observed.

In contrast, the composition for forming a cathode active material layer of Example 1, which contains 1-bromooctane, did not exhibit such side reactions with the sulfide-based solid electrolyte, as may be seen in FIG. 3A, demonstrating improved stability compared to the compositions of Comparative Examples 1 and 2.

In addition, the stability of the composition for forming a cathode active material layer of Example 4 was evaluated using the same method as that applied to the composition of Example 1. The results confirmed that, like the composition of Example 1, the composition for forming a cathode active material layer of Example 4 did not undergo side reactions between the solvent and the sulfide-based solid electrolyte, indicating improved stability.

The composition for forming a cathode active material layer according to an embodiment includes a dispersion medium that exhibits improved dispersibility, excellent stability, and suppressed reactivity with the sulfide-based solid electrolyte. Accordingly, the use of such a dispersion medium enables the fabrication of a cathode with excellent uniformity. A solid-state battery including such a cathode may exhibit improved cycle characteristics, high-rate characteristics, and low-temperature performance.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

## Claims

1. A solid-state battery comprising:
a cathode; an anode current collector; and a solid electrolyte layer disposed between the cathode and the anode current collector,
wherein at least one of the cathode or the solid electrolyte layer comprises a sulfide-based solid electrolyte; and
at least one of a solvent or a decomposition product of the solvent,
the solvent comprising a C1-C20 alkane compound including one or more halogen atoms.

2. The solid-state battery of claim 1, wherein the at least one solvent is present and has:
a Hansen solubility parameter (δ) of greater than 0 and less than 2.9 MPa^{1/2},
a boiling point of 280 °C or less, and/or
a dielectric constant of greater than 2.

3. The solid-state battery of claims 1 or 2, wherein the at least one solvent is present and comprises a C1-C12 alkane compound containing one or two halogen atoms:
preferably wherein the at least one solvent comprises at least one compound represented by Group 1:

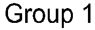

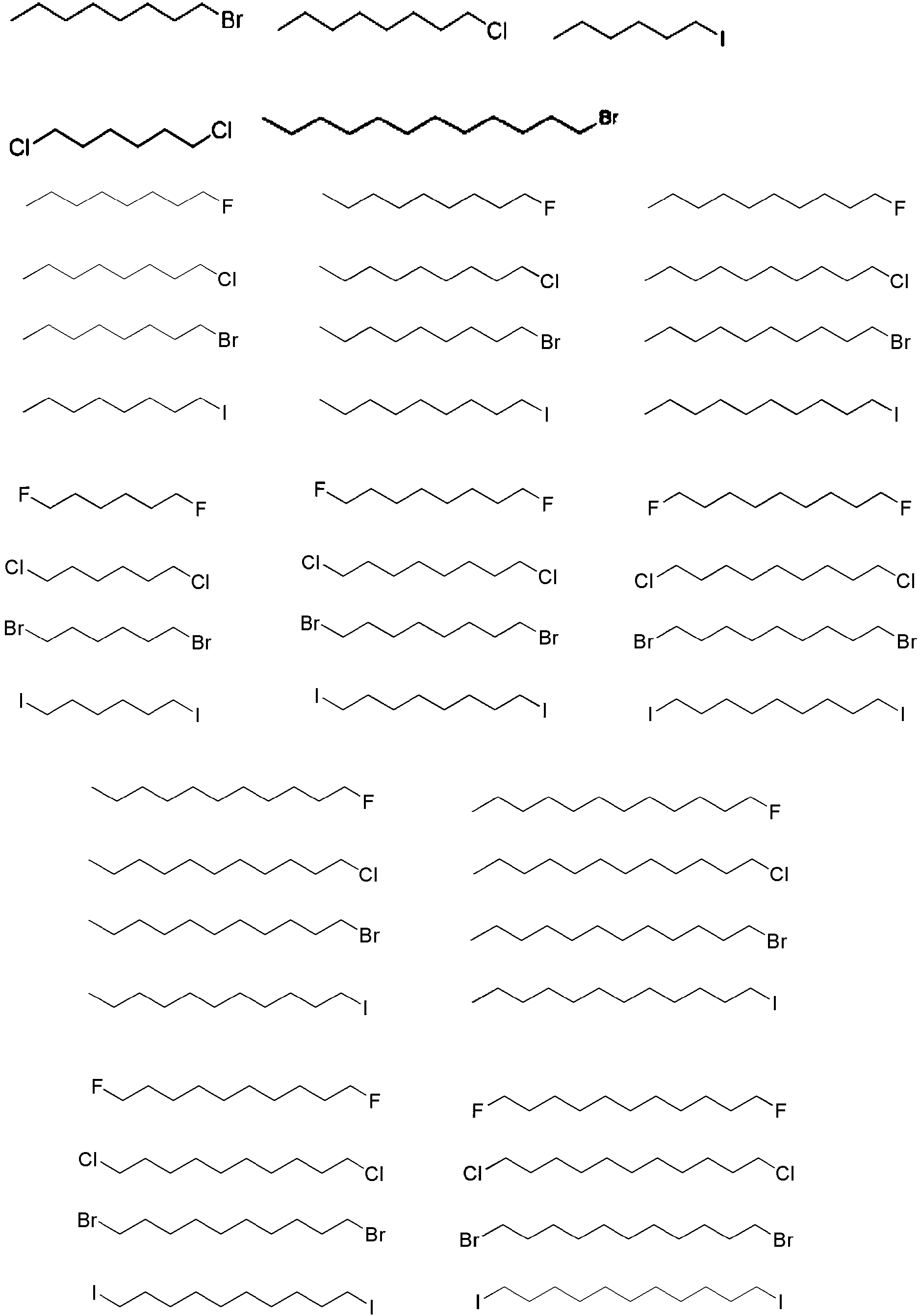

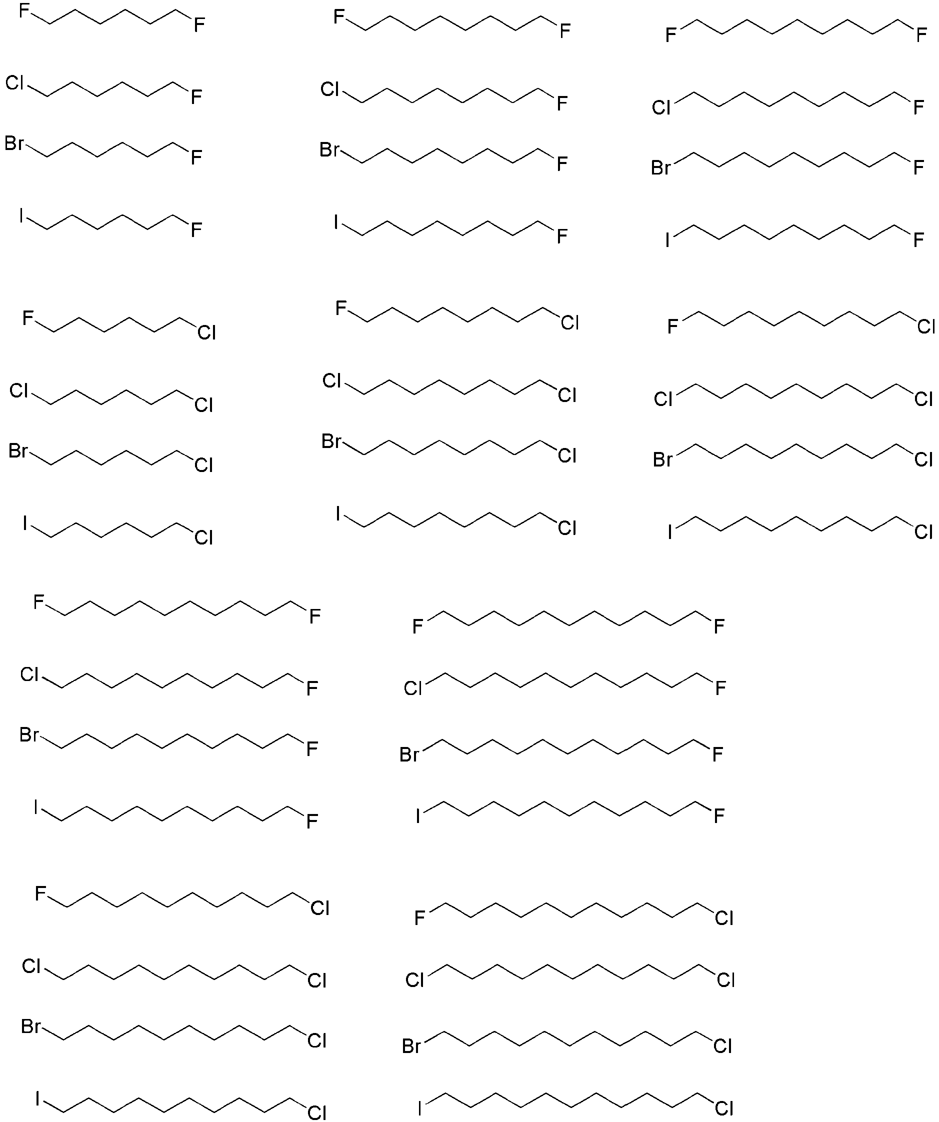

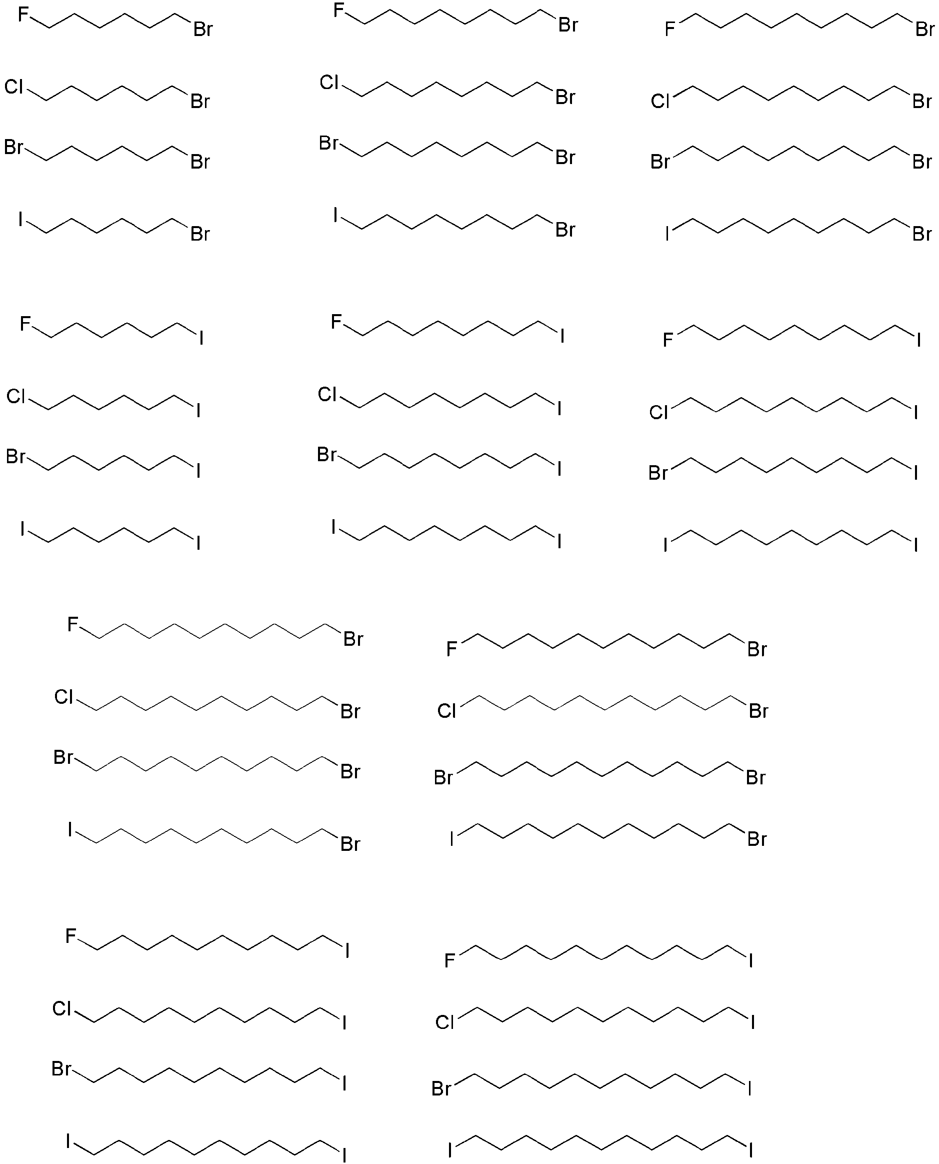

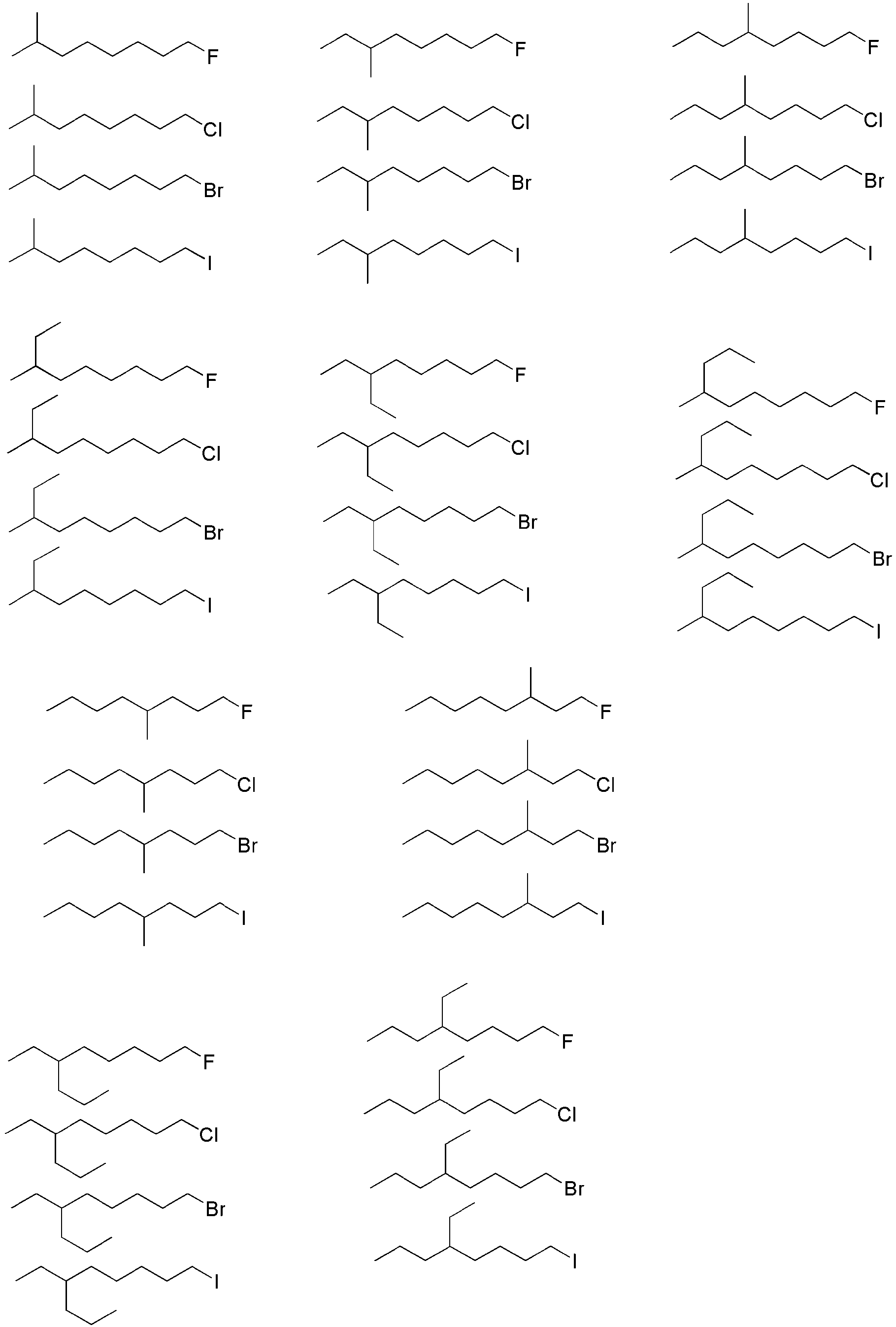

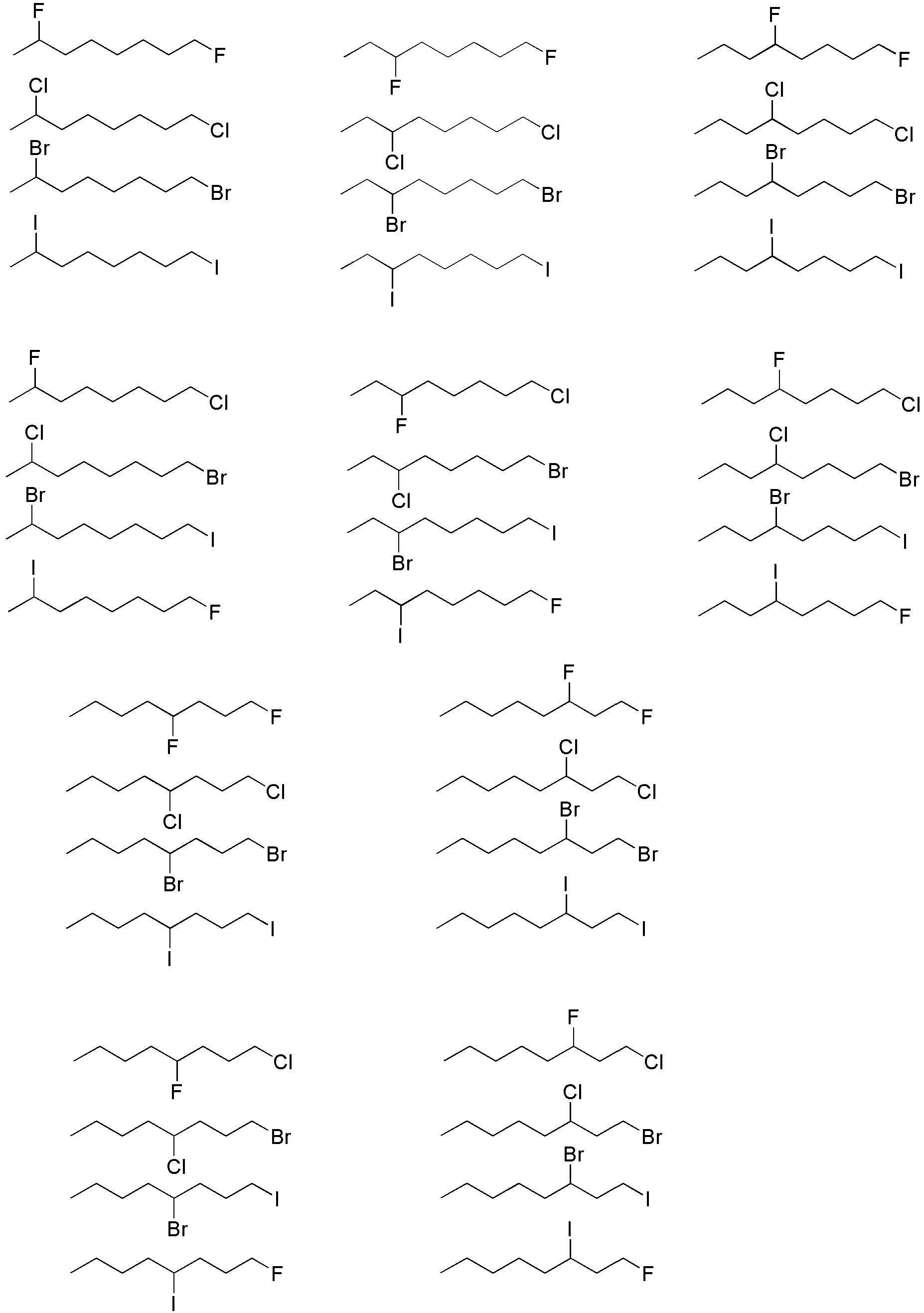

4. The solid-state battery of any of claims 1-3, wherein:
the cathode comprises a cathode current collector and a cathode active material layer,
the cathode active material layer comprises a cathode active material, a binder, a conductive material, a sulfide-based solid electrolyte, and at least one of a solvent or a decomposition product of the solvent, and
a total content of the at least one of the solvent or the decomposition product of the solvent is 60 parts by weight or less based on 100 parts by weight of a total weight of the cathode active material layer.

5. The solid-state battery of any of claims 1-4, wherein the sulfide-based solid electrolyte comprises at least one of Li₂S-P₂S₅, Li₂S-P₂S₅-LiX (where X is a halogen), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, and Z is Ge, Zn, or Ga), Li₂S-GeS₂, Li₂S-SiS₂-Li₃PO₄, Li₂S-SiS₂-LiₚMO_{q} (where p and q are positive numbers and M is P, Si, Ge, B, Al, Ga, or In), Li₇₋ₓPS₆₋ₓClₓ (0≤x≤2), Li₇₋ₓPS₆₋ₓBrₓ (0≤x≤2), or Li₇₋ₓPS₆₋ₓIₓ (0≤x≤2).

6. The solid-state battery of any of claims 1-5, wherein the sulfide-based solid electrolyte has a crystalline structure;
preferably wherein the sulfide-based solid electrolyte comprises an argyrodite-type solid electrolyte, wherein the argyrodite-type solid electrolyte is at least one of Li₆PS₅Cl, Li₆PS₅Br, or Li₆PS₅I.

7. The solid-state battery of any of claims 1-6,
wherein the solid electrolyte layer comprises a sulfide-based solid electrolyte, a binder, and at least one of a solvent or a decomposition product of the solvent, and
wherein a content of the at least one of the solvent or the decomposition product of the solvent is 60 parts by weight or less based on 100 parts by weight of a total weight of the solid electrolyte layer.

8. The solid-state battery of any of claims 1-7, further comprising a first anode active material layer disposed between the anode current collector and the solid electrolyte layer,
wherein the first anode active material layer comprises an anode active material and a binder,
wherein the anode active material comprises at least one of a carbon-based anode active material, a metal-based anode active material, or a metalloid-based anode active material, and
wherein the carbon-based anode active material comprises at least one of amorphous carbon, crystalline carbon, or porous carbon;
preferably wherein
after charging of the solid-state battery, a second anode active material layer is further disposed between the anode current collector and the first anode active material layer, and
the second anode active material layer is a metal layer, the metal layer comprising lithium or a lithium alloy.

9. A method of preparing a solid-state battery, the method comprising:
preparing a composition for forming a cathode active material layer by mixing a cathode active material, a first sulfide-based solid electrolyte, a binder, a conductive material, and a solvent;
preparing a cathode by coating and drying the composition on a cathode current collector to form the cathode active material layer;
providing an anode current collector;
preparing a laminate by positioning a solid electrolyte layer between the cathode and the anode current collector, the solid electrolyte layer comprising a second sulfide-based solid electrolyte, wherein the first and the second sulfide-based solid electrolyte can be the same or different; and
pressing the laminate,
wherein at least one of the cathode or the solid electrolyte layer comprises at least one of a solvent or a decomposition product of the solvent,
the solvent comprising a C1-C20 alkane compound including one or more halogen atoms.

10. The method of claim 9,
wherein the solvent is present and comprises at least one compound represented by Group 1:

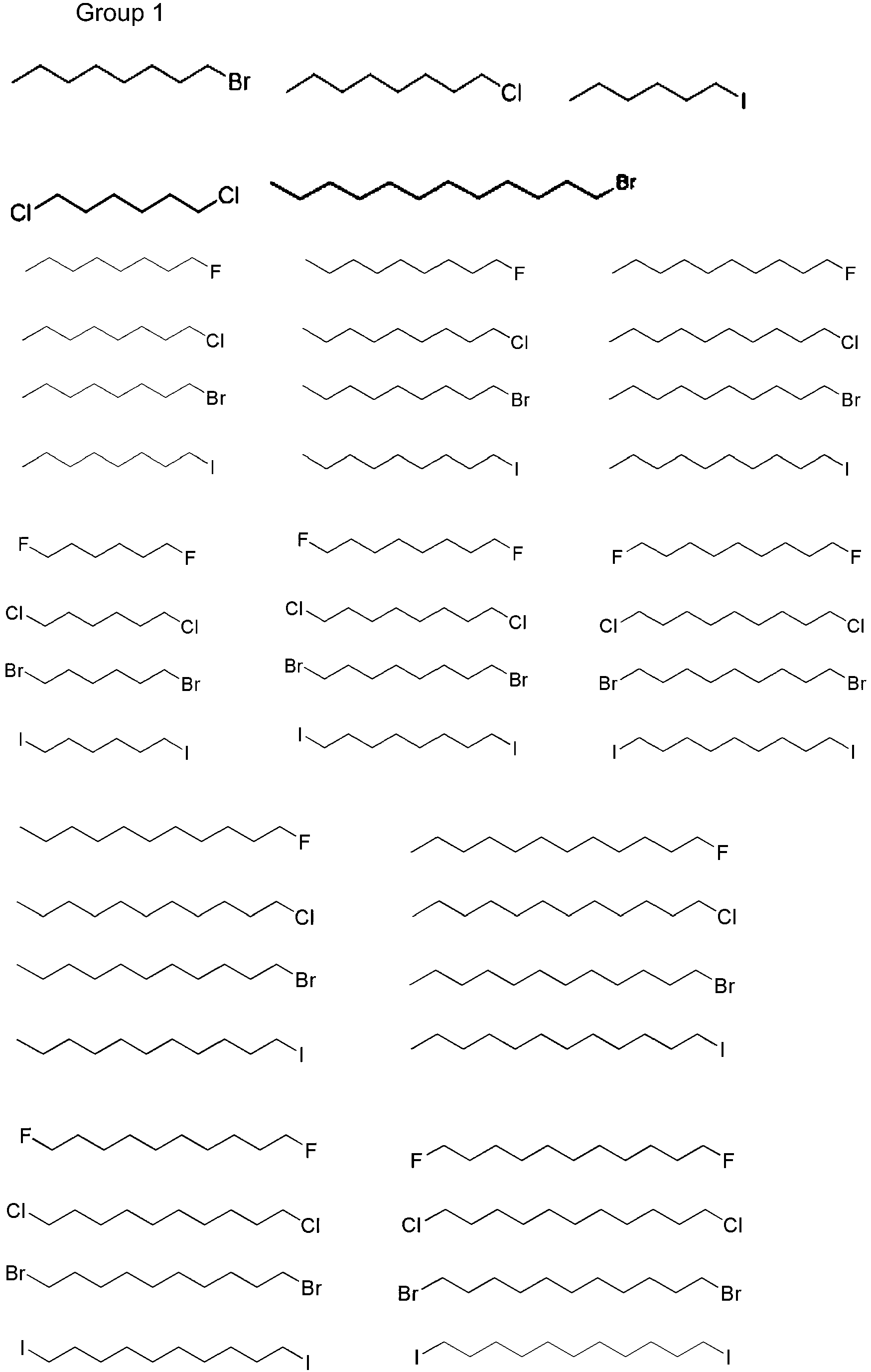

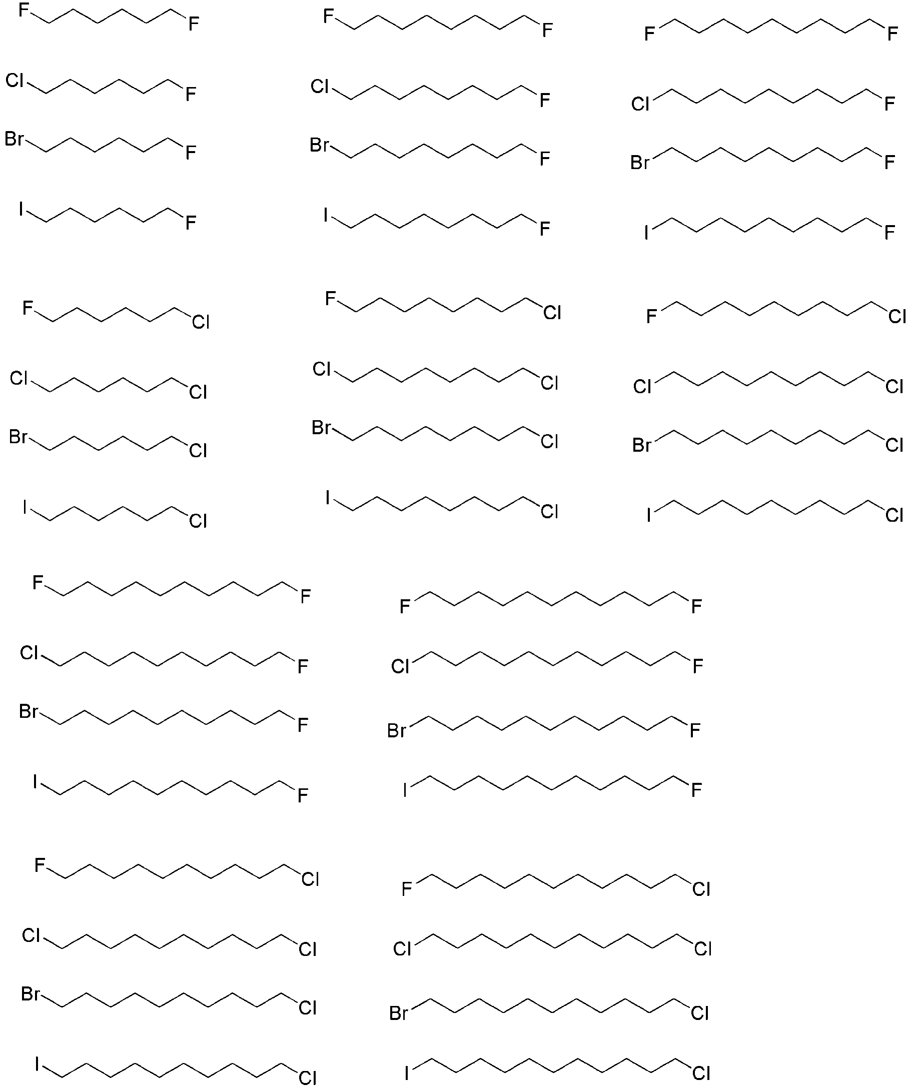

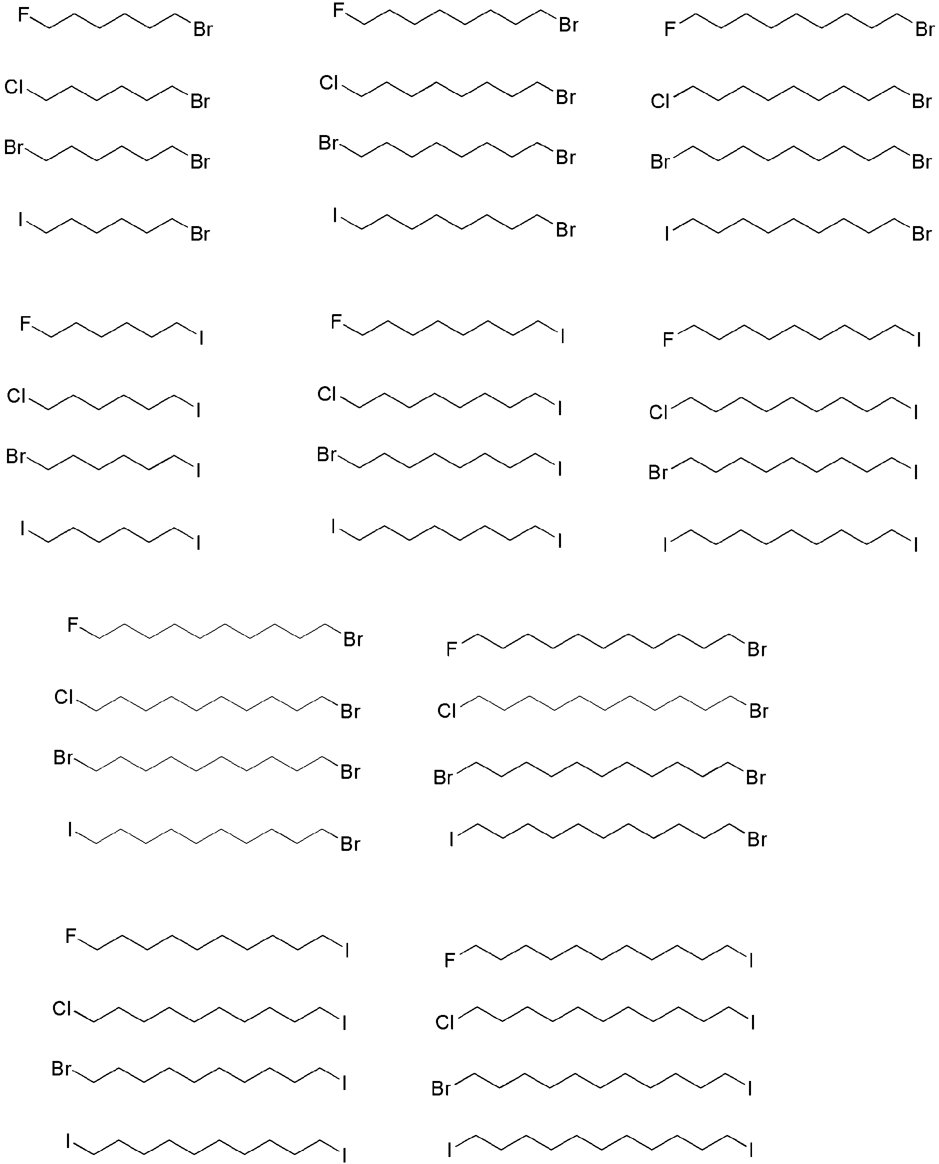

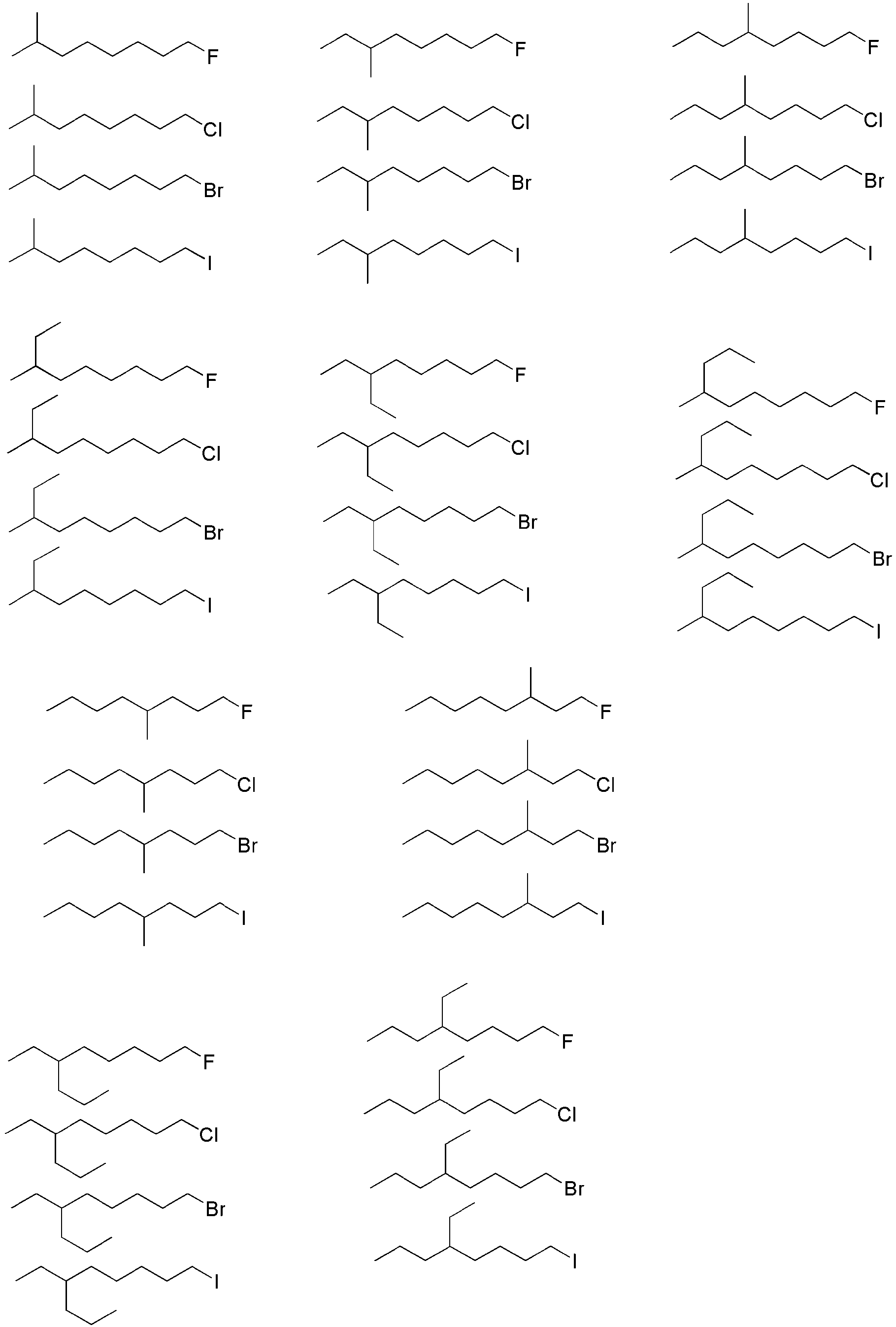

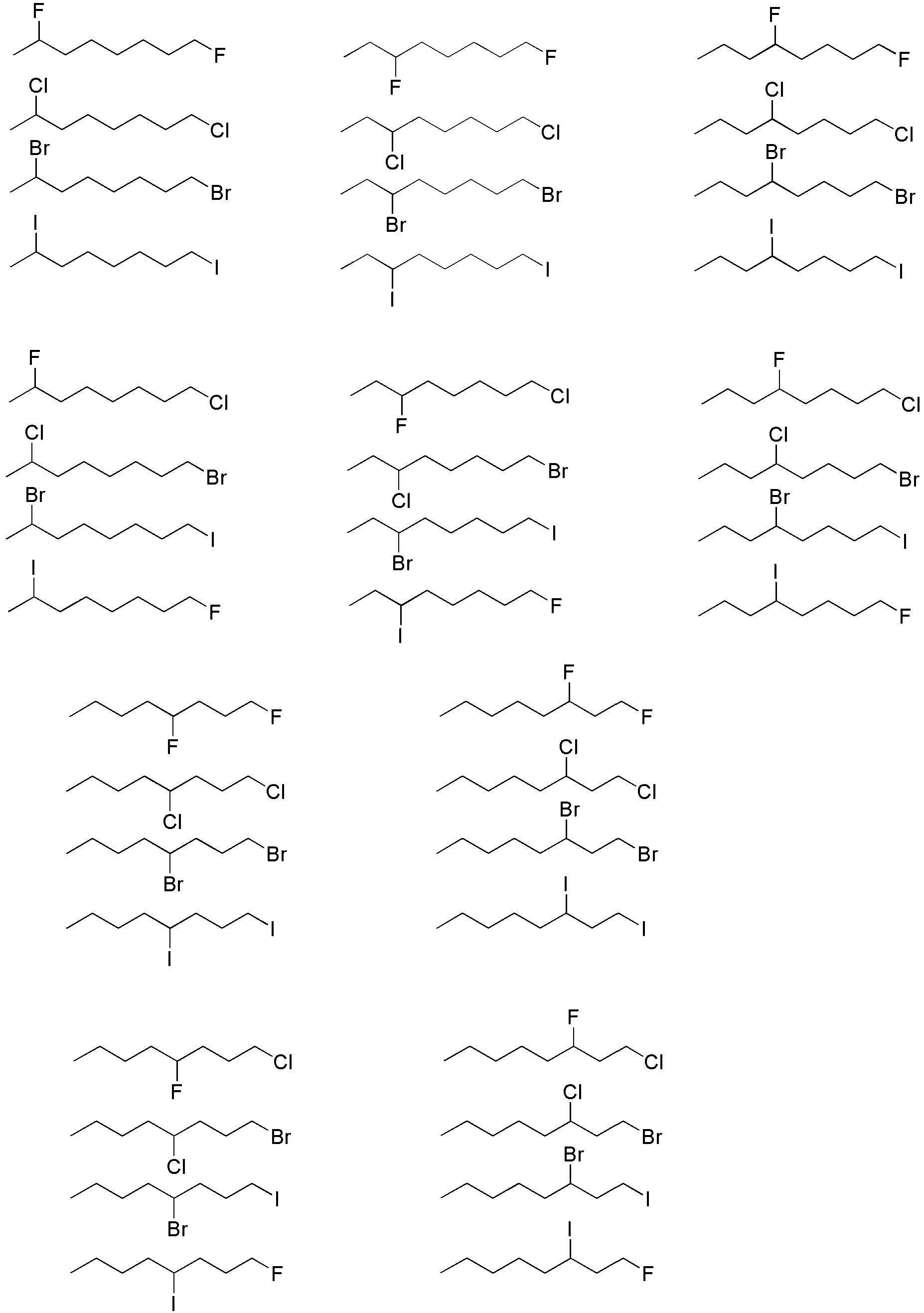

11. The method of claims 9 or 10, wherein the drying of the composition is performed at 25 °C to 100 °C under atmospheric or vacuum conditions.

12. The method of any of claims 9-11,
wherein the drying of the composition comprises primary drying and secondary drying,
wherein the primary drying comprises heat treatment at 50 °C to 100 °C, and the secondary drying is performed under vacuum conditions at 25 °C to 90 °C,
wherein the primary drying is performed at a higher temperature than the secondary drying.

13. A composition for forming a cathode active material layer for a solid-state battery, the composition comprising
a cathode active material, a sulfide-based solid electrolyte, a binder, a conductive material, and a solvent,
wherein the solvent comprises a C1-C20 alkane compound including one or more halogen atoms.

14. The composition of claim 13, wherein the solvent has a Hansen solubility parameter (δ) of greater than 0 and less than 2.9 MPa^{1/2}, and a boiling point of 280 °C or less.

15. The composition of claims 13 or 14, wherein the solvent comprises at least one compound represented by Group 1:
